# EUROPEAN PATENT SPECIFICATION

(11) **EP 0 528 693 B1**
(45) Date of publication and mention of the grant of the patent: **30.07.1997**
(21) Application number: 92307611.1
(22) Date of filing: 20.08.1992
(51) Int. Cl.: A61B 8/00, G01S 15/89, G10K 11/00

(54) **Diagnostic sonography apparatus having a plurality of ultrasound probes**
Schallabbildung-Diagnoseneinrichtung mit mehreren Ultraschallproben
Appareil de diagnostic par sonographie possédant une pluralité de sondes à ultrason.

(30) Priority: 20.08.1991 JP 207891/91
(43) Date of publication of application: 24.02.1993
(73) Proprietor: FUJITSU LIMITED, Kawasaki-shi, Kanagawa 211 (JP)
(72) Inventor: Fukui, Yutaka, c/o Fujitsu Limited, Kawasaki-shi, Kanagawa, 211 (JP)
(74) Representative: Fane, Christopher Robin King

(56) References cited:
- EP-A- 451 463
- DE-A- 3 624 668
- JOURNAL OF PHYSICS E ; SCIENTIFIC INSTRUMENTS, vol. 9, no. 3, March 1976, BRISTOL GB, pages 153 - 162 C.R.HILL, 'Ultrasonic imaging'
- ULTRASONICS, March 1965, BERLIN DE, pages 18 - 21 W. BUSCHMANN, 'new equipment and transducers for ophthalmic diagnosis'

## Description

The present invention relates to diagnostic sonography apparatus in which a plurality of ultrasound probes can be connected in a "stacked configuration" to one or more probe connectors of an ultrasound imaging unit.

Recently a variety of advanced ultrasound imaging systems have been proposed, and they are widely used in the clinical fields such as in the study of circulatory organs, internal medicine, examination of obstetric and gynaecological regions, etc. As the ultrasound imaging system has become a prevailing diagnostic tool in the clinical fields, various types of ultrasound probes different in frequency and shape from one another and adapted to meet clinical requirements have been proposed for use. In some clinical fields, the same region of interest has to be examined by using a variety of ultrasound probes. To this end, an ultrasound imaging unit is required to which a plurality of ultrasound probes can be connected simultaneously.

One example of ultrasound sonography apparatus permitting the simultaneous connection of two probes is described in DE-A-3624668. This apparatus may be considered to include an ultrasound imaging unit; and first and second ultrasonic probes, each having transducer means operable to emit ultrasound signals into a medium to be examined and to produce ultrasound data representative of reflections in the medium of such signals, which probes are both connected to the ultrasound imaging unit when the apparatus is in use so that a selected one of the probes can supply its said ultrasound data to the imaging unit for analysis and display by monitor means of the ultrasound imaging unit.

In this apparatus the imaging unit has three connection devices. The first and second connection devices permit simultaneous connection to the unit of respective first and second N-channel probes, and a switch is provided in the unit for selecting either the first or the second probe. The third connection device permits connection to the unit of a different probe having 2N channels, but in this case both the N-channel probes must be disconnected from the unit.

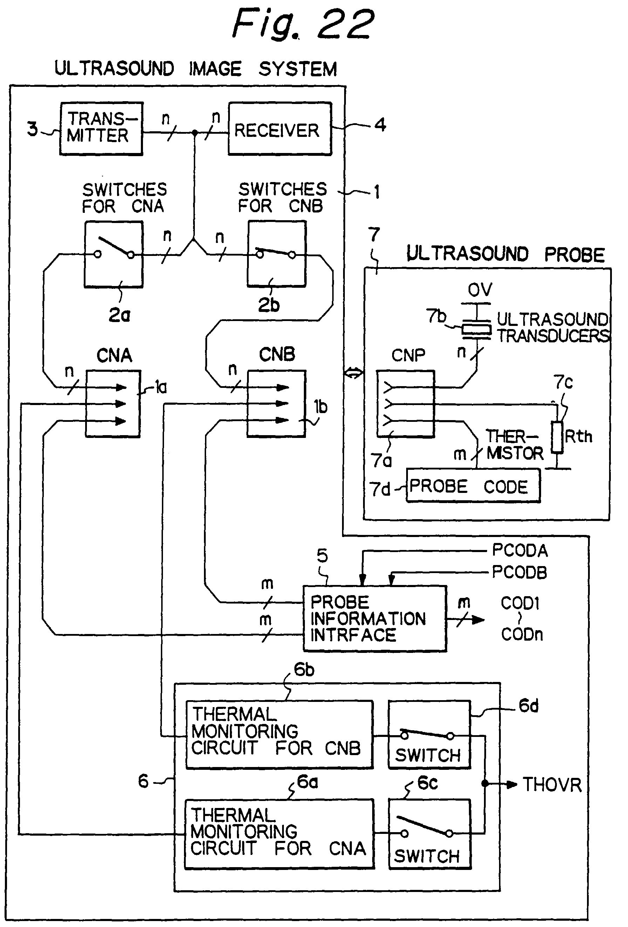

Fig. 22 shows the construction of another conventional ultrasound imaging system indicated generally with a reference numeral 1. A system of this type is disclosed in EP-A-0451463 which is a document falling under EPC Article 54(3).

In Figure 22, the reference numerals 1a and 1b indicate connectors, respectively, to which the connectors of ultrasound probes are to be connected. The numerals 2a and 2b indicate select switches used respectively to select that one of the connectors 1a and 1b to which is connected an ultrasound probe 7 that the operator is going to use. The reference numeral 3 indicates a transmission circuit that generates and supplies an electric signal that will drive an electroacoustic or ultrasound transducer provided in the ultrasound probe. An ultrasound is transmitted from the probe 7 and directed into the body of an examinee. The ultrasound is reflected there and returned to the probe 7. The numeral 4 indicates a reception circuit that amplifies a received electric signal derived from the conversion by the electroacoustic transducer of the reflected ultrasound or echo from inside the examinee's body. The reference numeral 5 indicates a probe information interface that reads the information indicative of the type of ultrasound probe 7 connected to the ultrasound imaging system 1. The numeral 6 indicates a thermal monitoring circuit having a thermistor that detects the temperature inside the ultrasound probe 7. The thermal monitoring circuit 6 comprises thermosensors 6a and 6b and thermosensor select switches 6c and 6d, for each of the ultrasound probes 7.

The ultrasound probe 7 comprises a connector that is to be connected to the connector 1a or 1b of the ultrasound imaging system 1, a group of electroacoustic transducers 7b that generate ultrasound, a thermistor 7c that detects the temperature of the ultrasound probe 7, and a probe information coder 7d that encodes and holds the information indicative of the type of the ultrasound probe 7.

In the above-mentioned arrangement, since connection of the connector 7a of the ultrasound probe 7 to either the connector 1a or 1b of the ultrasound imaging system 1 completes the connection between the connectors 7a and 1a or the connectors 7a and 1b, only one ultrasound probe 7 can be connected to each connector 1a or 1b. For this reason, the ultrasound imaging system 1 is provided with a plurality of connecting devices (connectors 1a, 1b) to each of which one ultrasound probe 7 is connectable. A desired ultrasound probe is selected for use in a clinical study by operating one of the corresponding select switches 2a and 2b provided on the ultrasound imaging unit 1.

In this case, the number of connecting devices that can be provided on one ultrasound imaging unit 1 imposes an upper limit on the number of ultrasound probes 7 that are simultaneously connectable to the ultrasound imaging system 1.

In the above-mentioned prior art, at a clinical site, the number of ultrasound probes 7 that may be used can be greater than the number of connecting devices with which the ultrasound imaging unit 1 is equipped and if it is necessary to use a probe 7 not currently connected to the ultrasound imaging unit 1, one of the already connected probes 7 has to be disconnected from the unit 1 and the necessary probe 7 must be connected to the unit 1 in place of the disconnected probe, which is very annoying and troublesome to the operator or doctor working on an ultrasound study. Note that the term "ultrasound" used in the present specification can be alternatively replaced by "ultrasonic", if necessary.

According to a first aspect of the present invention there is provided an ultrasound imaging unit and first and second ultrasound probes, each having transducer means operable to emit ultrasound signals into a body to be examined and to produce ultrasound data representative of reflections in the body of such signals, which probes are both connected to the ultrasound imaging unit when the apparatus is in use so that a selected one of the probes can supply its said ultrasound data to the imaging unit for analysis and display by monitor means of the ultrasound imaging unit; characterised in that: each probe has respective first and second connection devices, such that the first and second probes can be connected together in a stacked configuration in which the first connection device of the said second probe is connected to the second connection device of the said first probe, each probe also having bus means, interconnecting its said first and second connection devices, which bus means are also connected, when the probe concerned is selected for use, to the transducer means of the probe so that the ultrasound data produced by the transducer means is delivered to the bus means; and the said ultrasound imaging unit includes probe selection means operable to generate probe select signals for use by the probes to determine which one of them is selected for use, and also has a connection device, in the form of a plug or socket connector, at which it delivers the said probe select signals and receives such ultrasound data, to which connection device the said first connection device of the first probe can be connected, when the probes are connected together in the said stacked configuration, so that the respective bus means of the first and second probes are connected in series to the said connection device of the imaging unit and can serve to convey from the imaging unit to both probes the said probe select signals and to convey back from the selected probe to the imaging unit the ultrasound data produced by that probe.

According to a second aspect of the present invention, there is provided an ultrasound probe, being one of the ultrasound probes of diagnostic sonography apparatus embodying the first aspect of the invention.

According to a third aspect of the present invention, there is provided the ultrasound unit of diagnostic sonography apparatus embodying the aforesaid first aspect of the invention.

Accordingly, the above aspects of the present invention can provide a "stack-connectable" ultrasound probe, an ultrasound imaging unit to which a plurality of such probes are simultaneously connectable via the connecting device of the unit, the probe to be used being freely selectable, and diagnostic sonography apparatus including such an imaging unit and a plurality of such probes.

Reference will now be made, by way of example, to the accompanying drawings, in which:
Fig. 1 is a schematic block diagram showing the principle of the present invention;
Fig. 2 is a block diagram of an ultrasound probe embodying the present invention;
Fig. 3 is a block diagram of an ultrasound imaging unit embodying the present invention;
Figs. 4(a) to (c) show respective block diagrams of different components of diagnostic sonography apparatus embodying the present invention;
Fig. 5 is a block diagram of a first example of probe connection circuitry for use in the Fig. 4 embodiment;
Fig. 6 is a time chart relating to operation of the Fig. 5 circuitry;
Fig. 7 is a block diagram of a first example of probe information transmission circuitry for use in the Fig. 4 embodiment;
Fig. 8 is a time chart relating to operation of the Fig. 7 circuitry;
Fig. 9 is a block diagram of a thermal protection circuit for use as part of a thermal monitoring system in the Fig. 4 embodiment;
Fig. 10 is a graph showing the relationship between an output voltage and resistance of a thermistor in the Figure 9 thermal protection circuit;
Fig. 11 is a graph for showing a hysteresis characteristic of the Figure 9 thermal protection circuit;
Fig. 12 is a block diagram of a first example of number-of-probes measuring circuitry for use in the Figure 4 embodiment;
Fig. 13 is a graph illustrating possible results of a number-of-connected-probes measurement in the Figure 12 circuitry;
Fig. 14 is a block diagram of a second example of probe connection circuitry for use in the Fig. 4 embodiment;
Fig. 15 is a time chart relating to operation of the Fig. 14 circuitry;
Fig. 16 is a block diagram of a second example of probe information transmission circuitry for use in the Fig. 4 embodiment;
Fig. 17 is a time chart relating to operation of the Fig. 16 circuitry;
Fig. 18 is a block diagram of a second example of thermal monitoring circuitry for use in the Fig. 4 embodiment;
Fig. 19 is a time chart relating to operation of the Fig. 18 circuitry;
Fig. 20 is a block diagram of a second example of the number-of-probes measuring circuitry for use in the Fig. 4 embodiment;
Fig. 21 is a graph illustrating possible results of a measurement in the Fig. 20 circuitry; and
Fig. 22 is a block diagram of prior-art diagnostic sonography apparatus.

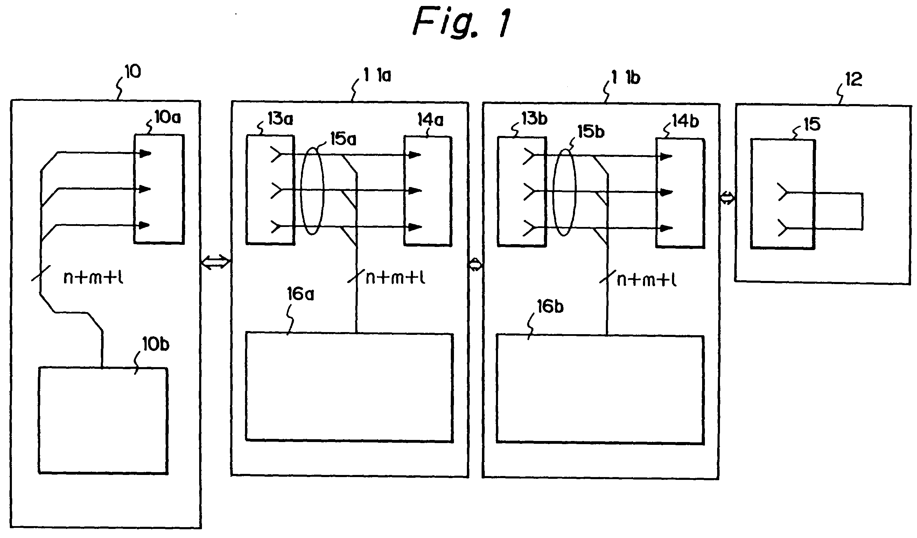

Referring now to Figs. 1 to 3, a diagnostic sonography system 200 comprising ultrasound probes 11 and an ultrasound imaging system (unit) 10, to which the ultrasound probes 11 are connected, will be briefly discussed below.

Fig. 1 shows the construction of the diagnostic sonography system 200 in which a plurality of ultrasound probes 11 are connected to a single connecting device (probe connecting device) 10a of the ultrasound imaging system (ultrasound imaging unit) 10. As shown, the ultrasound imaging unit (scanner) 10 comprises the probe connecting device 10a taking the form of a plug or socket and a monitor (monitor means) 10b that receives and analyses the data from the probe through the connecting device 10b and displays necessary data.

The reference numerals 11a and 11b indicate first and second ultrasound probes, respectively, comprising connecting devices (first connecting devices) 13a and 13b adapted for connection to the connecting device 10a of the ultrasound imaging system 210, other connecting devices (second connecting devices) 14a and 14b connected and appropriately wired to the connecting devices 13a and 13b, respectively, interconnecting wires (bus means) 15a and 15b laid between the connecting devices 13a and 14a and between 13b and 14b, respectively, and transducers (transducer means) 16a and 16b connected respectively to the interconnecting wires 15a and 15b so as to be in parallel with the connecting devices 14a and 14b, respectively.

The reference numeral 12 indicates a blind cap that comprises a connecting device 15 to be connected to the connecting device 10a of the ultrasound imaging system 10 when free (i.e. when no connecting device is connected thereat) or the free connecting device 14a or 14b of the ultrasound probe 11a or 11b (i.e. in Fig. 1 the connecting device 14b which is free). Connecting terminals of the connecting device 15 are short-circuited within the device.

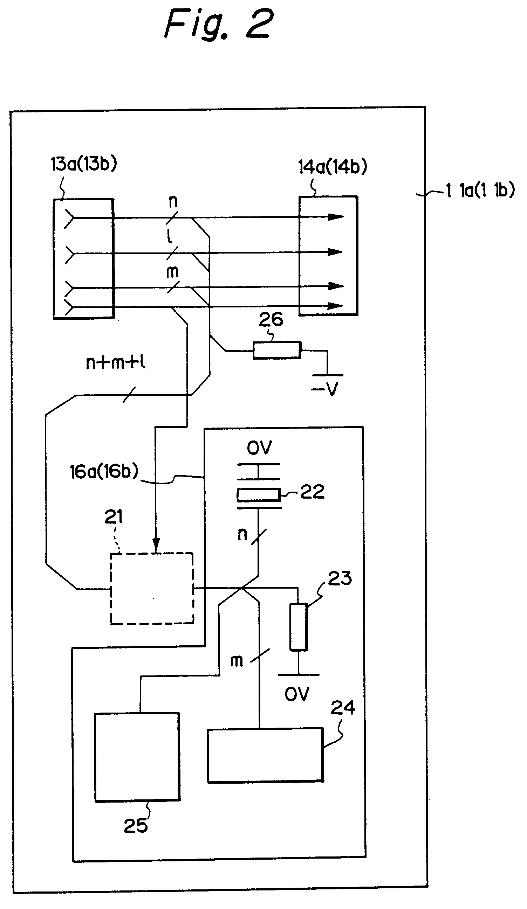

As shown in Fig. 2, the ultrasound probe 11a (or 11b has an input/output connector 21 for making a connection between the transducer 16a (or 16b) and ultrasound imaging system 10.

Further, the transducer 16a (or 16b) in the ultrasound probe 11a (or 11b) comprises an electroacoustic or ultrasound transducer element 22 that converts an electric signal to an ultrasound signal that is directed into the examinee and also converts the ultrasound signal reflected from inside the examinee to an electric signal, a probe information setting means 24 for setting probe information and sending it to the ultrasound imaging system 10, and a connected-status display 25 for indicating the status of a probe connection for confirmation by sight, sound and touch.

Further the transducer 16a (or 16b) has a thermosensor 23 that detects the temperature of a probe connected.

Moreover, the ultrasound probe 11a (or 11b) comprises a probe check signal generator 26 for use in providing information on the number of probes 11a (or 11b) connected or a change of the number of probes connected.

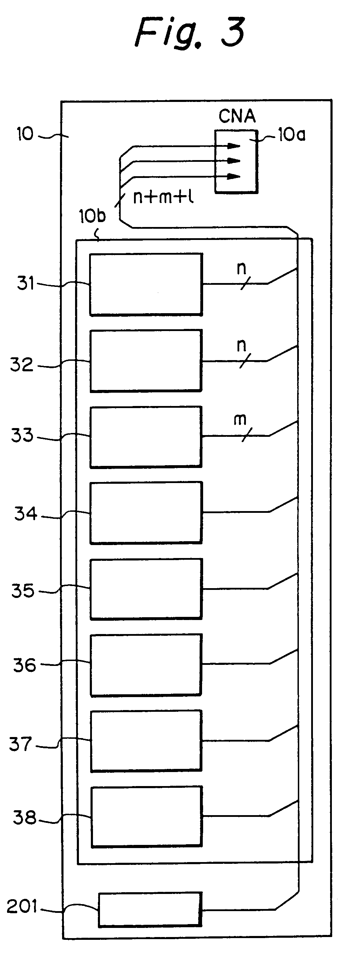

As shown in Fig. 3, the monitor 10b of the ultrasound imaging system 10 comprises a transmitter 31 for transmitting an electric signal that is used to generate an ultrasound signal, a receiver 32 for receiving and amplifying an electric signal derived from conversion by the electroacoustic transducer element 22 of the ultrasound probe 11a (or 11b) of the ultrasound reflected from inside the examinee, a probe information interface 33 for reading the information indicative of the ultrasound probe 11a (or 11b) connected, and a display driver 35 for providing a signal that will drive the connected-status display 25 provided in the ultrasound probe 11a (or 11b).

Further the ultrasound imaging system 10 may comprise an input/output connector driver 38 for driving the input/output connector 21 provided in the ultrasound probe 11a (or 11b) connected to the ultrasound imaging system 10.

The ultrasound imaging system 10 also may have a thermal monitor 34 for receiving a signal from the thermosensor 23 provided in the ultrasound probe 11a (or 11b) as necessary and detecting the probe temperature.

Furthermore, the monitor 10b of the ultrasound imaging system 10 is provided with a detector 36 to detect the number of probes connected and the change thereof.

Also the monitor 10b of the ultrasound imaging system 10 is provided with a cap detector 37 for detecting whether the blind cap 12 is attached to the connecting device 10a or 14a (or 14b) of the ultrasound imaging system 10 or the ultrasound probe 11a (or 11b).

Moreover, an ultrasound imaging unit 10 embodying the present invention may be provided with a display 201 to display information including the number, types and shapes of probes connected to the ultrasound imaging system 10, and indicating the probe currently in use.

By connecting (fitting) the first connecting device 13a (or 13b) of the first ultrasound probe 11a (or second probe 11b) to the single connecting device 10a of the ultrasound imaging unit 10, the first connecting device 13b (or 13a) of the second ultrasound probe 11b (or first probe 11a) to the second connecting device 14a (or 14b) of the ultrasound probe 11a (or 11b) and the blind cap 12 to the second connecting device 14b of the second ultrasound probe 11b (or 11a) to close the connector section, the two ultrasound probes 11a and 11b can be connected in a stacked configuration to the single connecting device 10a.

Concerning the ultrasound probe 11a (or 11b), the input/output connector 21 is opened or closed with the output signal from the input/output connection driver 38 so that the transducer 16a (or 16b) of the ultrasound probe 11a (or 11b) to be used is put into a circuit of the ultrasound imaging system 10 so that that one of the desired plurality of ultrasound probes 11a or 11b connected through the single connecting device 10a of the ultrasound imaging system 10 is electrically connected to the ultrasound imaging system 10.

When one probe 11a (or 11b) is thus connected to the ultrasound imaging system 10 and signals are provided from the transmitter 31 to drive the electroacoustic transducer element 22, this element 22 in the transducer 16a (or 16b) converts the signal ultrasound that is transmitted into the examinee, receives and converts into an electric signal the ultrasound signal reflected from inside the examinee, and delivers the electric signal (ultrasound data) thus converted to the receiver 32. Thus, the result of the ultrasound examination is received and can be displayed, for example, as an image on the display 201.

The thermosensor 23 detects the temperature of the probe in use, and sends it to the thermal monitor 34 for confirming that the probe is operating normally. The probe information setting means 24 informs the probe information interface 33 of the probe information including the frequency, dimensions, number, spatial arrangement, shape, etc. of the electroacoustic transducer element 22 of the connected ultrasound probe. That is, necessary data for analysis by the transmitter 31, receiver 32 and thermal monitor 34 are thus provided.

During use in an ultrasound examination, the connected-status display 25, which is for example, a light-emitting means such an LED or the like, provides a sight, sound or touch indication of the connected status for easy confirmation of the probe that is being used among the ultrasound probes 11a (or 11b) connected.

The ultrasound imaging system 10 employs the number-of-probes detector 36 to generate a signal used to examine the connected status of the probe check signal generator 26 of each of the ultrasound probes 11a and 11b connected to the ultrasound imaging system, thereby checking the number or change in number of the ultrasound probes 11a and 11b connected. All the ultrasound probes comprise, for example, the same resistor and constant voltage or current source, and thus the probe checking signal generator 26 can detect the quantity of a voltage or current generated from a combination of the resistors and constant voltage or current sources to determine the number of probes connected.

Furthermore, before the ultrasound imaging system is used in an ultrasound study, the cap detector 37 in the ultrasound imaging system 10 checks whether or not the blind cap 12 is fitted at the connecting device 14b (or 14a) of a connected ultrasound probe 11a (or 11b) or at the connecting device 10a of the ultrasound imaging system 10.

In a diagnostic sonography system embodying the present invention, connecting devices different in connecting structure are provided in each of at least two of a plurality of individual ultrasound probes 11 (11a, 11b, 11c, ..., 11n) connected in series, i.e. "stacked", to the single connecting device 10a of the ultrasound scanner (imaging unit) 10 such that one of the plurality of ultrasound probes 11 can be selected for use in an ultrasound study.

More particularly, in the case that the first connecting device in one ultrasound probe is for example, of the plug type, the second connecting device is of the socket type. The single connecting device of the ultrasound imaging system 10 can be of either the plug or socket type of connecting structure.

Therefore, if the connecting device 10a of the ultrasound imaging system 10 is of one type of connecting structure, for example the plug type structure, the first ultrasound probe 11a connected to the ultrasound imaging system 10 has the other type of connecting device (socket type) connected to the connecting device 10a of the ultrasound imaging system 10, and the second ultrasound probe 11b has that other type of connecting device (socket type) connected to the one type of connecting device (plug type) of the first ultrasound probe 11a. Thus the plurality of ultrasound probes 11a to 11n can be stack-connected to the single connecting device 10a of the ultrasound imaging system 10.

The first connecting device of each ultrasound probe 11 can be connected to the ultrasound imaging system or to the second connecting device of another ultrasound probe 11. In other words, the destinations of the first and second connecting devices of each ultrasound probe 11 are not known. However, in the stacked configuration the first connecting device 13a of the first ultrasound probe 11a is connected to the connecting device 10a of the ultrasound imaging system while the second connecting device 14a of the ultrasound probe 11a is connected to the first connecting device of the second ultrasound probe 11b.

Further, a selection controller, switching device, and a discriminating means permitting the operator to know the number and application of the ultrasound probe 11 and determine which of the ultrasound probes connected is in operation are provided to enable free selection of one of the plurality of ultrasound probes 11 stack-connected in series, and to enable transmission to the ultrasound imaging system 10, and analysis, of the diagnostic information obtained with the transducer 16 in the ultrasound probe 11.

The operator will first use the probe information interface 33 of the ultrasound imaging system 10 to collect, by scanning, a part or all of the information such as number, performance, characteristic, shape, application, resolution, dimensions, spatial arrangement, frequency, etc. of all the ultrasound probes 11 (11a, 11b, 11c, ..., 11n) connected to the ultrasound imaging system 10 and display the data on the display 201 for the individual probes.

Thereafter the operator can select one of the plurality of ultrasound probes 11 stack-connected to the ultrasound imaging system by watching the information displayed on the display and operating, for example, a predetermined ultrasound probe, of the select keys provided on the control panel of the ultrasound imaging system.

In the diagnostic sonography system according to the present invention, a predetermined selection controller transmits the information of the selected ultrasound probe 11a only to the monitor 10b of the ultrasound imaging system 10; this transmitted information is subject to a predetermined analysis.

Upon completion of one ultrasound study, repetition of a similar selection procedure to that mentioned above will permit the selection of a desired ultrasound probe easily, correctly and rapidly for the next ultrasound study.

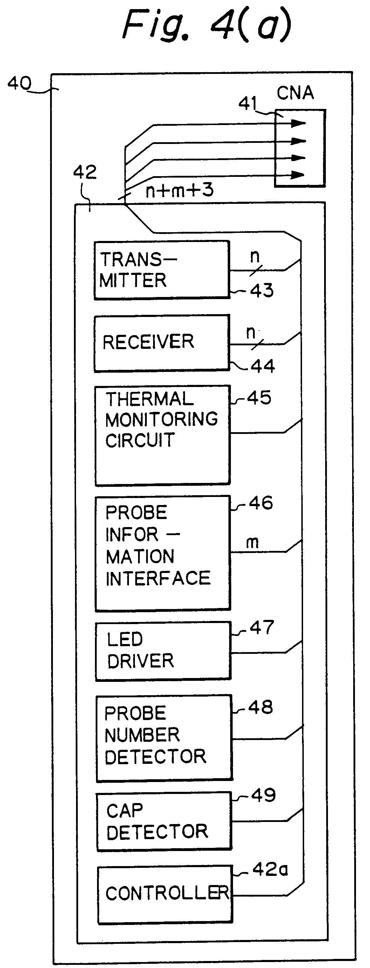

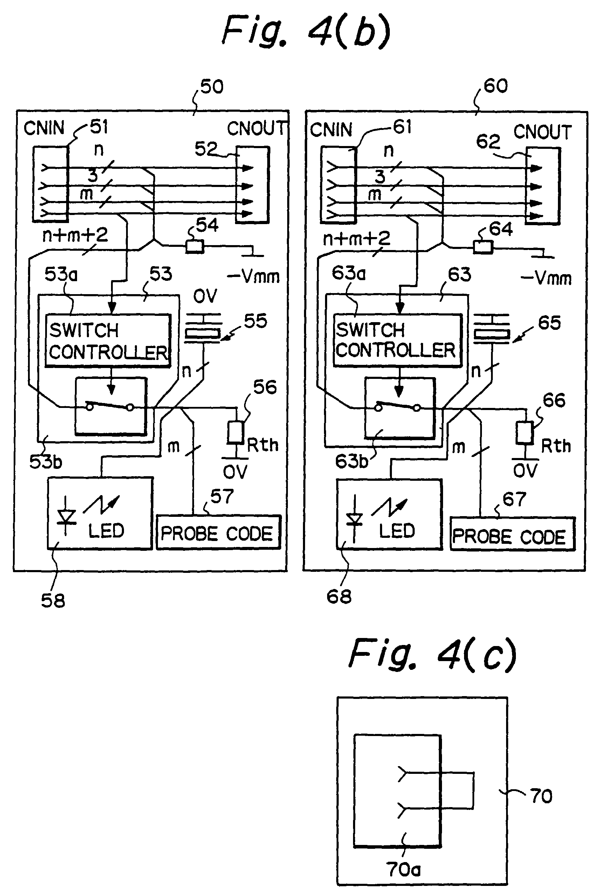

An embodiment of the diagnostic sonography system according to the present invention will be described below with reference to Figs. 4 to 21.

The embodiment of a diagnostic sonography system will be described taking, for the sake of illustration, an example in which two ultrasound probes of the same connecting structure are connected.

Fig. 4 shows the construction of one embodiment of the diagnostic sonography system according to the present invention. The reference numeral 40 indicates an ultrasound imaging system having a plug type connector (CNA) 41 as its said connecting device, to which ultrasound probes 50 and 60 can be connected in series, and a monitor 42 that analyses the information supplied, via the plug connector 41, from the probes 50 and 60.

As shown in Fig. 4(a), the monitor 42 comprises a transmission circuit 43 that produces an electric signal for the transmission of an ultrasound into the examinee, a reception circuit 44 that receives and amplifies an electric signal derived from conversion of the ultrasound reflected from inside the examinee, a thermal monitoring circuit 45 that detects the temperature of a probe, a probe information interface 46 that, upon receiving set probe information, reads the information, such as type, shape, etc., of the probe 50 or 60 currently connected, a display drive 47 that delivers a signal indicating that the probe 50 or 60 is being used, a number-of-probes detector 48 that detects the number of probes 50 or 60 connected to the plug connector 41, a cap detector 49 that detects that a blind cap is attached directly to the plug connector 41 or to the probe 50 or 60 connected to the plug connector 41, and a controller 42a that designates various kinds of control to the probe 50 or 60.

As shown in Fig. 4(B), the probe 50 (or 60) comprises a socket type connector (CNIN) 51 (or 61), serving as the first connecting device, which can be fitted into the plug connector 41 of the ultrasound imaging system 40, a plug connector (CNOUT) 52 (or 62), serving as the second connecting device, which can be fitted onto another probe's socket connector 61 (or 51), an input/output connector 53 (or 63) that establishes an electrical connection with the ultrasound imaging system 40, a probe check signal generation circuit 54 (or 64) forming a circuit having a constant resistance, a plurality (for example 64 or 128) of ultrasound transducer elements 55 (or 65) in a group, that form together an electroacoustic or ultrasound transducer, a thermosensor 56 (or 66) made of a thermistor, a probe coder 57 (or 67), corresponding to the previously-mentioned probe information setting means, for presetting the probe information such as frequency, dimensions, number, spatial arrangement, shape, etc. of the ultrasound transducer elements 55 (or 65) in the above-mentioned group, and a set-status indicator 58 (or 68), corresponding to the previously-described connected-status indicator, made of light-emitting diodes (LED). Such probe information or codes are analyzed in the probe information interface 46 of the ultrasound imaging system to discriminate the structure and performance of the ultrasound probe connected.

The input/output connector 53 (or 63) comprises a switch controller 53a (or 63a) that, upon receiving a select signal from the ultrasound imaging system 40, controls the switching of electrical connections between the ultrasound imaging system 40 and the selected ultrasound probe 50 (or 60), and an on/off switch 53b (or 63b) that turns on and off those electrical connections under the control of the switch controller 53a (or 63a).

As shown in Fig. 4(c), the cap 70 is provided with a socket connector 70a that is to be fitted directly into the plug connector 41 or into the plug connector 52 of 62 of the probe 50 or 60 connected to the plug connector 41, and each of its connecting terminals is short-circuited within the cap 70 on the side opposite the side which connects to the plug connector. The cap 70 has a body that covers the receptacle connector 70a and is made of an electrically conductive material for electromagnetic shielding, and has the entire outer surface, except for the connector opening, covered with an electrically insulative film for electrical insulation from the inner surface.

With the ultrasound imaging system 40 operated in this diagnostic sonography system, the socket connector 51 of the probe 50 is connected to the single plug connector 41 of the ultrasound imaging system 40 and the receptacle connector 61 is connected to the plug connector 52 of the probe 50; thus the plurality of probes 50 and 60 are connected to the single connector (plug type) of the ultrasound imaging system 40. At this time, the connection of the cap 70 with the plug connector 62 of the probe protects the circuit end and shuts off any external noise.

When the probes 50 and 60 are connected to each other, the probe coder 57 or 67 sends to the probe information interface 46 detailed information on the probe 50 or 60 connected to the ultrasound imaging system 40, and thereafter a signal is sent from the ultrasound imaging system 40 to put into operation the input/output connector 53 or 63 of the probe 50 or 60 that is to be used, thus causing the switch controller 53a or 63a to activate the switch 53b or 63b, thereby providing an electrical connection between the ultrasound imaging system 40 and the desired probe 50 or 60.

When the ultrasound imaging system 40 and the desired probe 50 or 60 are thus electrically connected to each other, the ultrasound imaging system 40 generates a transmission signal to drive the group of ultrasound transducers 55 or 65, which will generate an ultrasound. At this time, the temperature measured by the thermosensor 56 or 66 is sent to the thermal monitoring circuit 45 to monitor whether if the ultrasound is generated at a time when the probe temperature is within a normal operating range. A set-status display 58 or 68 may be provided to emit light so that the operator knows which probe 50 or 60 is in operation.

In this diagnostic sonography system, the socket connector 51 is connected to the single plug connector 41 of the ultrasound imaging system 40 and the socket connector 61 of the probe 60 is connected to the plug connector 52 of the probe 50, thereby permitting the connection of a plurality of probes 50 and 60 to the single (plug) connector 41 of the ultrasound imaging system 40. At this time, connection of the cap 70 to the plug connector of the probe 60 protects the circuit end and shuts off any external noise.

The input/output connector 53 or 63 is activated to turn on the switch 53b or 63b by means of the switch controller 53a or 63a, thereby electrically connecting the probe 50 or 60 to the ultrasound imaging system 40. Thus, a desired probe can be selected freely from amongst the probes 50 and 60 connected to the same plug connector 41 of the ultrasound imaging system 40.

At the time of an ultrasound study, probe information is sent from the probe coder 57 or 67 and probe temperature measured by the thermosensor 56 or 66 is supplied. Thus detailed information on the probe 50 or 60 connected to the ultrasound imaging system 40 can be supplied and the transmission of ultrasound in a normal range of probe temperatures can be monitored. The set-status display 58 or 68 emits light so that the operator will easily know which is in operation, 50 or 60. Hence, it is easy to select a probe and diagnose the examinee by using a desired probe 50 or 60.

By coupling the cap 70 to the plug connector 62 of the probe 60 while the probe 50 or 60 is connected, it is possible to protect the circuit end and prevent any external contact with the connector and prevent external noise. Thus the operator can be safely engaged in diagnostic sonography, and equipment reliability as well as the reliability and efficiency of the diagnosis can be considerably improved.

Various variants of the measuring system in this diagnostic sonography system will be described below.

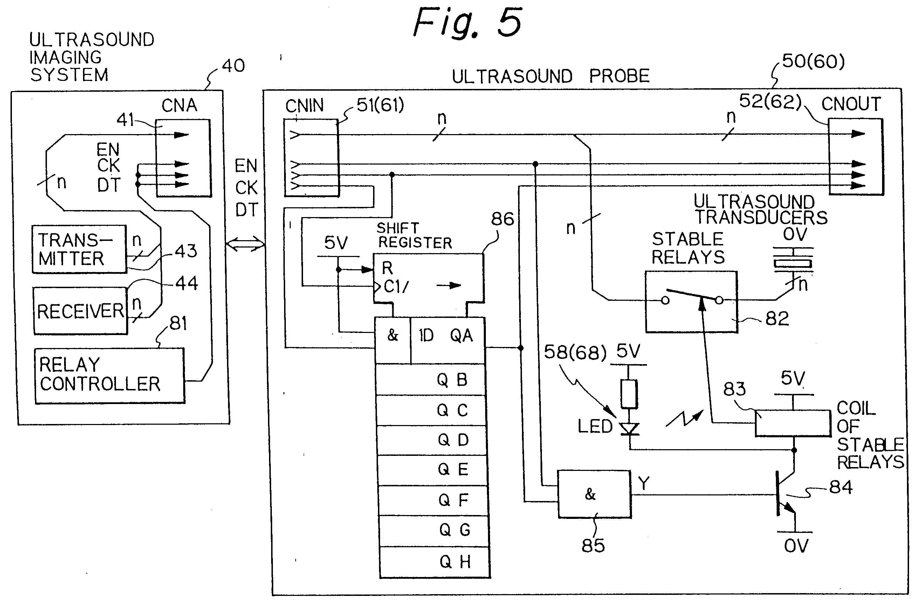

First, an example of the probe connection by means of an input/output connector will be described below. This example uses electromagnetic relays as shown in Fig. 5.

The ultrasound imaging system 40 has a relay controller 81, instead of the previously-mentioned controller 42a. The ultrasound probe 50 or 60 has provided in the input/output connector 53 (or 63) thereof, which places the probe in an electrically-connected state when selected, a switch 82 and a coil 83 of normally-off electromagnetic relays (stable relays), instead of the previously-described switch 53b (or 63b), and a circuit formed by a transistor 84, instead of the previously-mentioned switch controller 53a (or 63a), which excites the coil 83 of the electromagnetic relays, an AND circuit that turns on the transistor 84 and a shift register 86 that supplies a signal to the AND circuit 85.

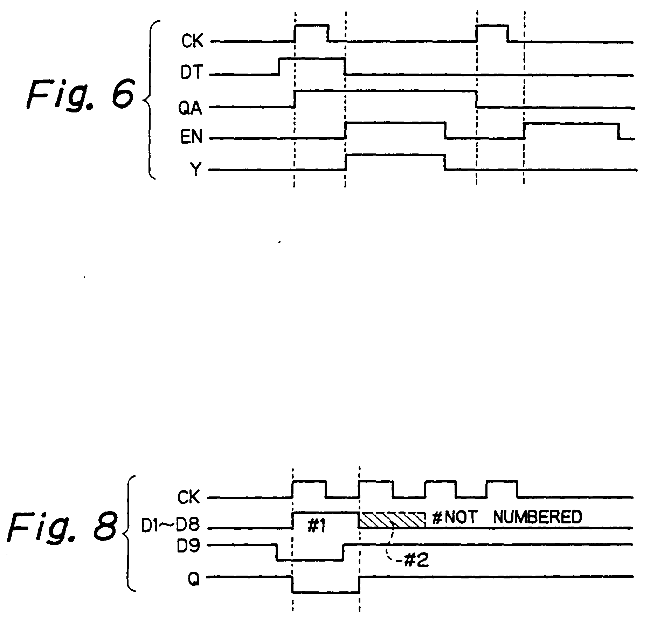

As shown in Fig. 6, a data signal DT including a probe designation number and clock signal CK are supplied to the probe 50 or 60 from the relay controller 81 of the ultrasound imaging system 40. When a high level signal is produced at the output terminal QA of the shift register 86 (provided in the corresponding probe), in accordance with the signals DT and CK both being high, and a high-level enable signal EN is supplied to the probe, both the high level signals QA and EN are ANDed by the AND circuit 85 to provide the result as a high level signal Y that will turn on the transistor 84 and excite the coil 83 of the electromagnetic relays so that the switch 82 is closed. The ultrasound transducers 55 (or 65) are thus energised to serve as electroacoustic transducers for the generation of an ultrasound.

On the other hand, if no data signal DT is supplied when the clock signal CK and enable signal EN are supplied, or if the data signal DT including another probe designation number is supplied, no high level signal is delivered at the output terminal QA of the shift register 86 and also no high level signal is delivered from the AND circuit 85. In this case, the switch 82 is in the open condition (the transistor 84 is not turned on and the coil 83 of the electromagnetic relays not excited) so that the ultrasound transducers 55 (or 65) will not be energised. Thus no ultrasound is generated.

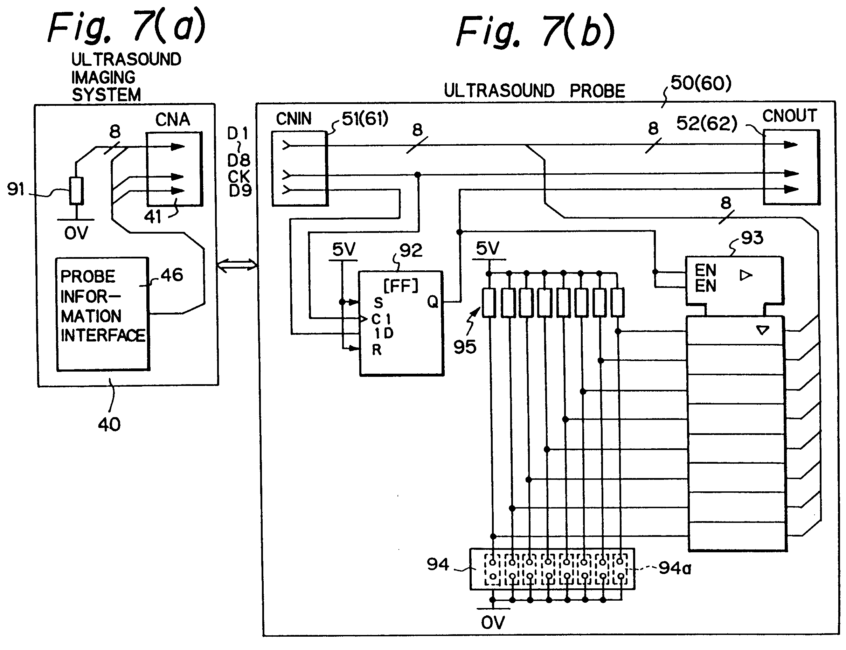

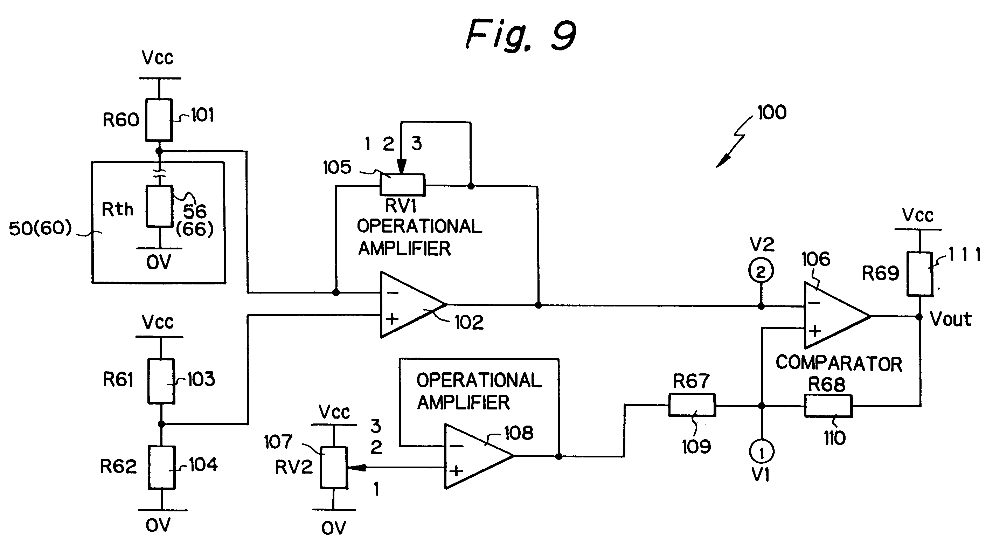

A variant of the probe information transmission system will be explained with reference to Figs. 7(a), 7(b) and 8. In this example, a combination of a three-state buffer and pin board is adopted.

The ultrasound imaging system 40 has a probe information interface 46 connected to an 8-bit data line (for transmission of data signals D1 to D8), the individual lines of which are each grounded by means of a resistor 91, and the probe information interface 46 is also connected to a clock signal line CK and a control bit signal line D9.

The probe 50 (or 60) is provided with a flip-flop 92, instead of the previously-mentioned input/output connector 53. The flip-flop 92 is supplied with the clock signal CK and control bit signal D9. These signals CK and D9 are so arranged that when an initial clock signal CK is supplied, the output signal Q of the flip-flop 92 takes a low level and when a second clock signal CK is supplied, the output signal takes a high level. Also a three-state buffer 93 is provided that is supplied at its two enable terminals EN with the output signal Q of the flip-flop 92 to input and output stored data. Further, there are provided a pin board 94, instead of the previously-described probe coder 57 (or 67), to set probe information that is to be stored in the three-state buffer 94, and as many resistors 95 as there are pins, interposed between one end of the pin board 94 and the power source. The pin board 94 sets the necessary 8-bit information taking as "1" the position where a short-circuit bar 94a is inserted and as "0" the position where no such short-circuit bar is inserted. Such 8-bit information, namely information relating to the ultrasound probe in question, is read out once to the buffer 93 and the result is transmitted to the ultrasound imaging system 40.

In the above-mentioned arrangement, when the control bit signal D9 takes a low level while the clock signal CK takes a high level, the flip-flop 92 delivers an output signal Q at the same low level as the control signal D9 so that the three-state buffer 93 becomes active and stored probe information is supplied from the pin board 94 and delivered. When the control bit signal D9 takes a high level and clock signal CK also takes a high level, the flip-flop 92 delivers an output signal Q at the same high level as the control bit signal D9 and the signal reflecting the stored probe information is no longer delivered from the three-state buffer 93 so that the low level will result from the grounding action of the resistors 91 of the ultrasound imaging system 40. At this time, if an output is delivered from any other probe 60 (0r 50) concurrently connected to the ultrasound imaging system, at least one of the lines for the data signals D1 to D8 remains at a high level. When an output signal no longer comes from any probe 50 or 60, all the data lines take a low level.

As shown in Fig. 9, the thermal monitoring system uses a thermistor that has a negative resistance-thermal characteristic. This thermal monitoring system has a thermal monitoring circuit that comprises a resistor and an operational amplifier in combination.

In a thermal protection circuit 100, provided instead of the previously-described thermal monitoring circuit 45 of the ultrasound imaging system 40, there is provided a resistor (R60) 101 between a wire connected to the thermistor 56 (66) of the probe 50 (60) and the power source Vcc, and a connection is made from the connection node between the thermistor 56 (66) and resistor 101 to the inversion input terminal (-) of an operational amplifier 102.

Two resistors 103 and 104 having different resistances are connected in series between the power source Vcc and ground potential (0V) and a connection is made from the connection node between the resistor (R61) 103 and resistor (R62) 104 to the non-inversion input terminal (+) of the operational amplifier 102. The inversion input terminal (-) and output terminal of the operational amplifier 102 are wired to each other via a variable resistor (RV1) 105. The output terminal of the operational amplifier 102 is connected to the inversion input terminal (-) of a comparator 106.

There is connected between the power source Vcc and ground potential (0V), a variable resistor (RV2) 107 whose variable terminal is connected to the non-inversion input terminal (+) of an operational amplifier 108. The inversion input terminal (-) of the operational amplifier 108 is connected to the output terminal thereof. The output terminal of the operational amplifier 108 is connected to the non-inversion input terminal (+) of the comparator 106 by means of a resistor (R67) 109. The non-inversion input terminal (+) of the comparator 106 is connected to the output terminal thereof by means of a resistor (R68) 110. There is connected a resistor (R69) 111 between the output terminal of the comparator 106 and power source Vcc.

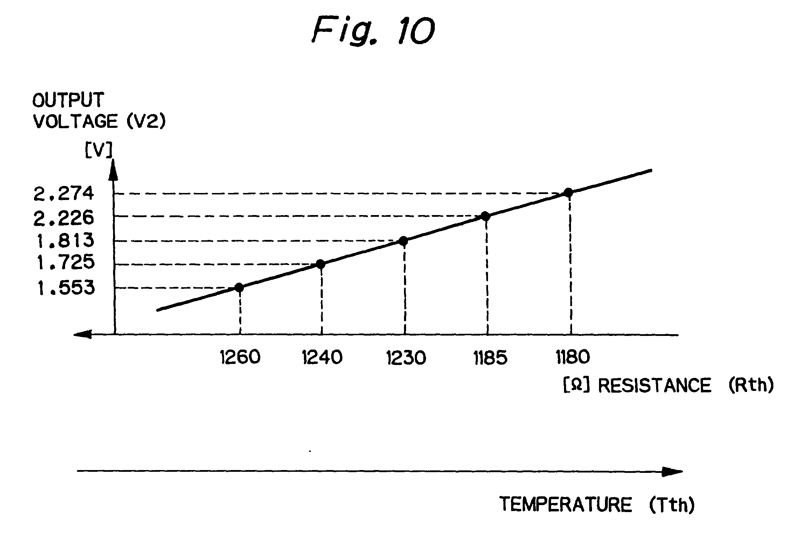

As the temperature rises, the thermistor 56 (or 66) incorporated in the probe 50 (60) has a reduced resistance. As shown in Fig. 10, the characteristic of output voltage (V2) vs. resistance of thermistor 56 (or 66) is negative.

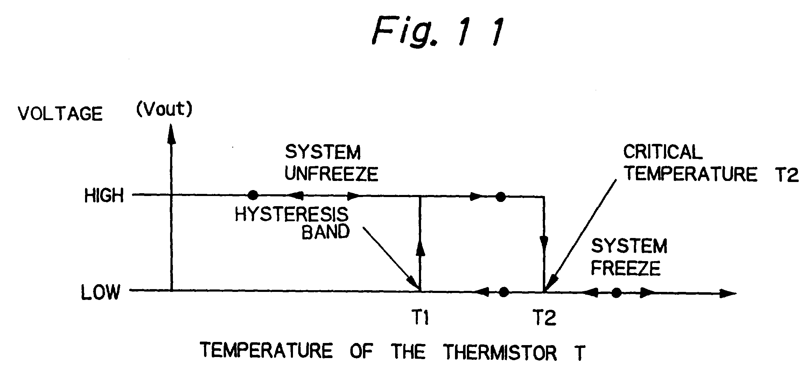

In this thermal monitoring circuit, as shown in fig. 11 the output voltage (Vout) vs. temperature measured by the thermistor 56 (or 66) has a hysterisis characteristic. If the temperature rises above a predetermined value T2, the output voltage (Vout) goes to a low level. When the temperature falls below a predetermined value T1, the output voltage (Vout) goes up to a high level, whereby "chattering" phenomena of the temperature control are prevented.

The thermal protection offered by this circuit is such that when the input signal V2 to the inversion input terminal (-) of the comparator 106 is larger than the input signal V1 to the non-inversion input terminal (+), the output signal from the output terminal is lowered so that the ultrasound transducers 55 (or 65) detect when the temperature has risen above the predetermined temperature and stops transmission of the electric signal that drives the probe. Thus, the probe is inhibited from generating more ultrasound.

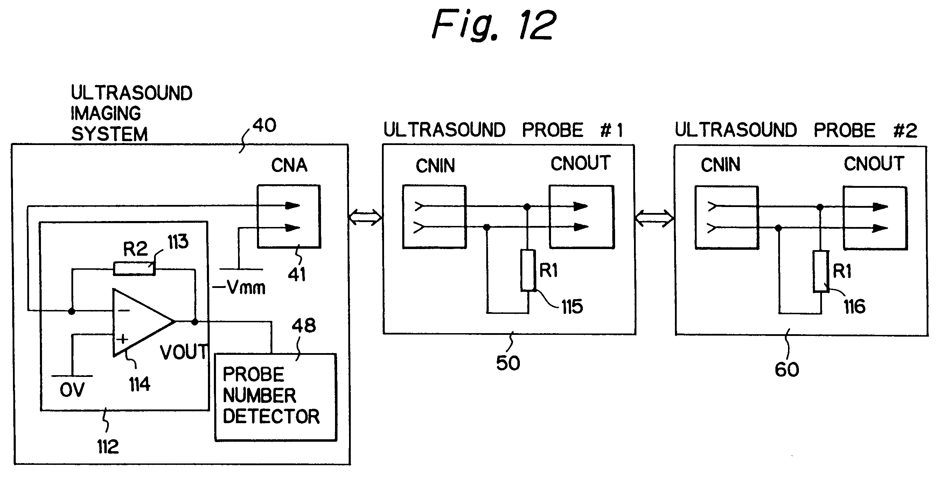

As part of a system to detect the number of probes, a measuring power source (-Vmm) is provided in the ultrasound imaging system 50, as shown in Fig. 12.

There is also provided, between the plug connector 41 of the ultrasound imaging system 40 and the number-of-probes detector 48, an amplification circuit 112 using one of the transmission lines allocated to the number-of-probes system. In the amplification circuit 112, there is provided an operational amplifier 114 whose non-inversion input terminal (+) is grounded and whose inversion input terminal (-) is connected to the output terminal thereof by means of a resistor (R2) 113. A negative power source (-Vmm) is connected to the other transmission line allocated to the number-of-probes detecting system, which line is connected to the plug connector 41.

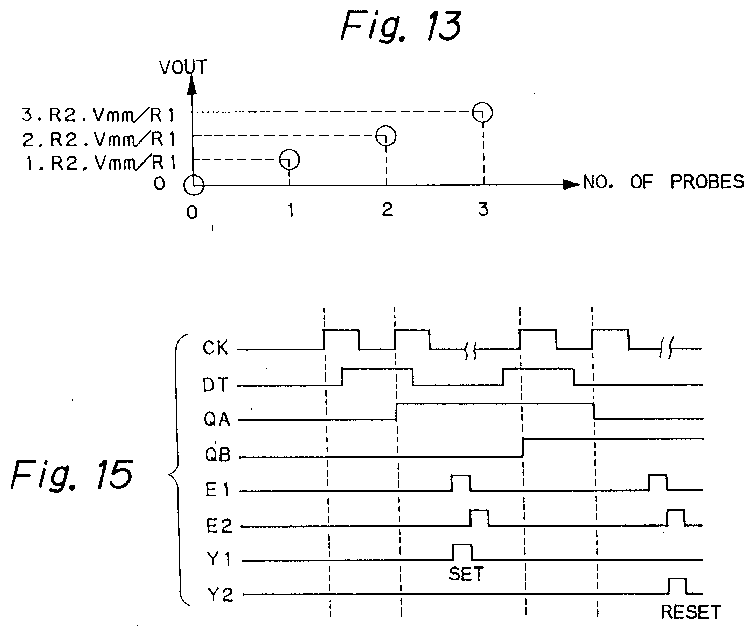

In the probe 50 (or 60) a resistor (R1) 115 (or 116) is connected between the two number-of-probes detecting system lines. The resistor 115 is an example of the probe check signal generator used in the number-of-probes detecting system of an ultrasound imaging system 40 embodying the present invention. In this embodiment, resistors having the same resistance are provided in the respective ultrasound probes. More particularly, the resistor in each ultrasound probe causes a "unit" voltage drop when connected, so that by checking the overall voltage drop, it is possible to know how many probes are connected to the ultrasound imaging system 40, as shown in Fig. 13.

Since the output voltage of the operational amplifier 114 is proportional to the number of probes connected to the ultrasound imaging system 40, the number of probes connected can be easily known by measuring the output voltage of the amplification circuit 112 in the number-of-probes detector 48. This is a very simple way to know the number of connected probes and can be done even with the cap 70 not attached.

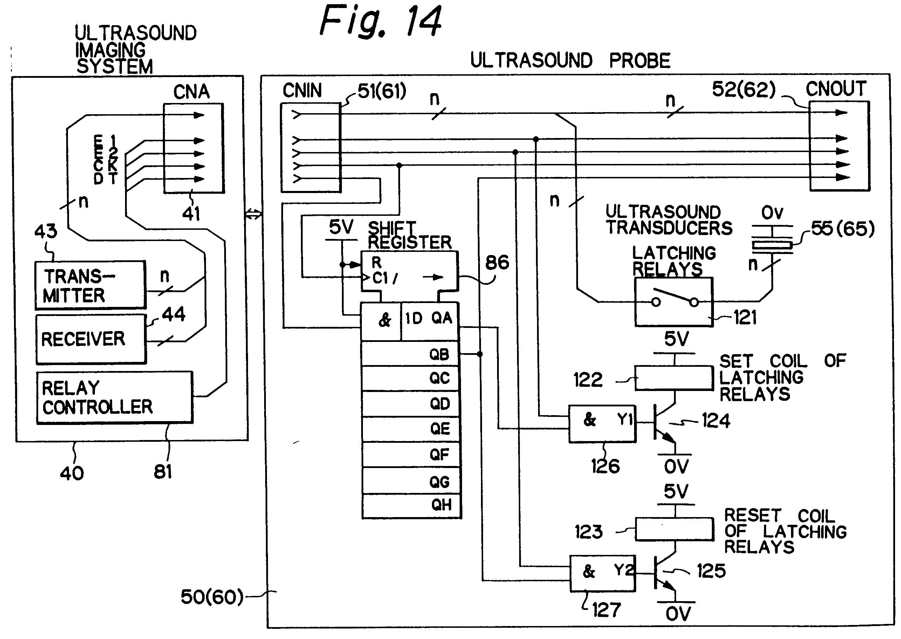

Variants of these embodiments will be described with reference to Figs. 14 to 21.

A variant of the probe connection by means of an input/output connector will be described below. This variant uses latching relays as shown in Fig. 14.

In the Figure, the reference numeral 121 indicates a switch for the latching relays, 122 a set coil of the latching relays, and 123 a reset coil of the latching relays. The set coil 122 and reset coil 123 of the latching relays are energised by transistors 124 and 125, respectively, which are turned on with output signals (transistor ON signals) from AND circuits 126 and 127, respectively. When the output signal from the output terminal QA of the shift register 86 and control signal E1 from the relay controller 81 are at a high level, the AND circuit 126 delivers a high level signal (transistor ON signal), and when the output signal from the output terminal QB of the shift register 86 and control signal E2 from the relay controller 81 are at a low level, the AND circuit 127 delivers a high level signal (transistor ON signal). Other arrangements of the probe connecting system are similar to those in the first variant.

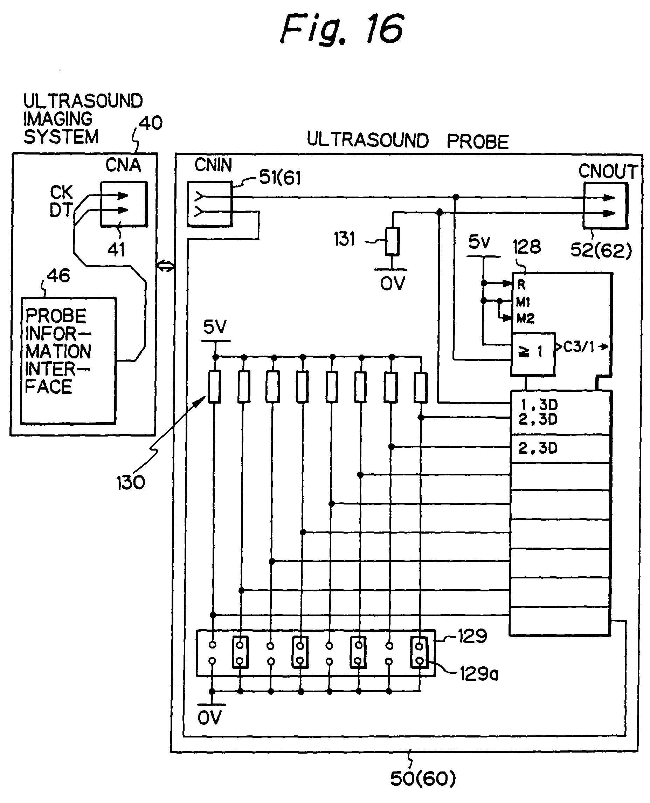

As shown in Fig. 15, when the relay controller 81 delivers a clock signal CK and a data signal DT including a probe designation number, the output signal delivered at the output terminal QA of the shift register 86 changes to a high level at the second rise of the clock signal CK. When a control signal (enable signal) E1 is delivered from the relay controller 81, the AND circuit 126 supplies a transistor on signal (Y1), the set coil 122 is excited and thus the switch 121 is closed. The ultrasound transducers 55 (or 65) produce an ultrasound.

Thereafter, a high level signal is delivered at the output terminal QB of the shift register 86 synchronously with the rise of clock signal, and a control signal (enable signal) E2 is delivered from the relay controller 81. Then the AND circuit 127 generates a transistor ON signal (Y2), the reset coil 123 is excited and the switch 121 is opened. Thus the ultrasound transducers 55 (or 65) are stopped from generating ultrasound. Since it is necessary to supply a current only for operating the latching relays, the power consumption by the coil is very small.

As shown in Fig. 16, another embodiment of the probe information transmission system comprises a shift register 128 that can store each bit of an 8-bit data item and that shifts the stored data bits one by one toward the output terminal QH with one bit being delivered at the output terminal QH each time a clock signal CK is supplied, a pin board 129 so connected as to supply one bit into each storage area of the shift register 128, and a power source (5V) connected to each bit setting terminal of the pin board 129 by means of a resistor 130.

The output terminal QH of the shift register 128 is connected to the transmission terminal for data signal DT of the socket connector 51 (or 61), the transmission terminal for data signal DT of the plug connector 52 (or 62) is connected to the first storage area (input terminals 1D and 3D) of the shift register 128, and the input terminals 1D and 3D are connected to ground by means of a resistor 131. The resistance of the resistor 131 is sufficiently high for transmission of a digital signal on the transmission line between the plug connector 52 (or 62) and shift register 128. Concerning the probe information in the probe information transmission system, insertion of at least one short-circuit bar 129a into the pin board 129 of the probe 50 (or 60) represents 8-bit data other than zero, and all 8 bits being zeros means that no probe is connected.

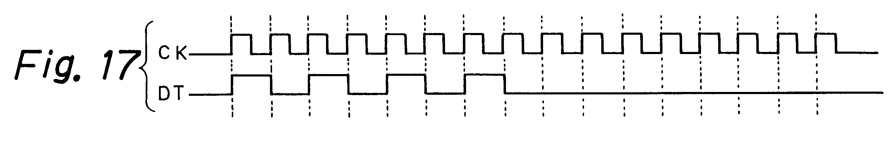

As shown in Fig. 17, each time a clock signal CK is supplied to the shift register 128, one bit is delivered as the data signal DT at the output terminal QH. If only one probe 50 (or 60) is connected to the ultrasound imaging system 40, the first 8 clock signals CK result in the transmission of probe information (other than zero) relating to the single connected probe and the subsequent 8 clock signals CK result in transmission of the next set of probe information in which all 8 bits are zeros, thereby indicating that no more probes are connected.

In the casein which two probes 50 and 60 are connected to each other, the output from the shift register of the probe 60 is connected to the first storage area of the shift register 128 at the probe 50 by means of the plug connector 52. With the first 8 clock signals CK, the probe information relating to the probe 50 is supplied to the probe information interface 46 and with the subsequent 8 clock signals CK, the probe information relating to the probe 60 is supplied to the probe information interface 46 through the shift register 128 at the probe 50.

Therefore, by reading out the probe information once to the probe information interface 46 after connection of a probe, all the probe information on the probes 50 and 60 currently connected can be supplied to the ultrasound imaging system 40 and does not have to be read out at the subsequent use of the probes.

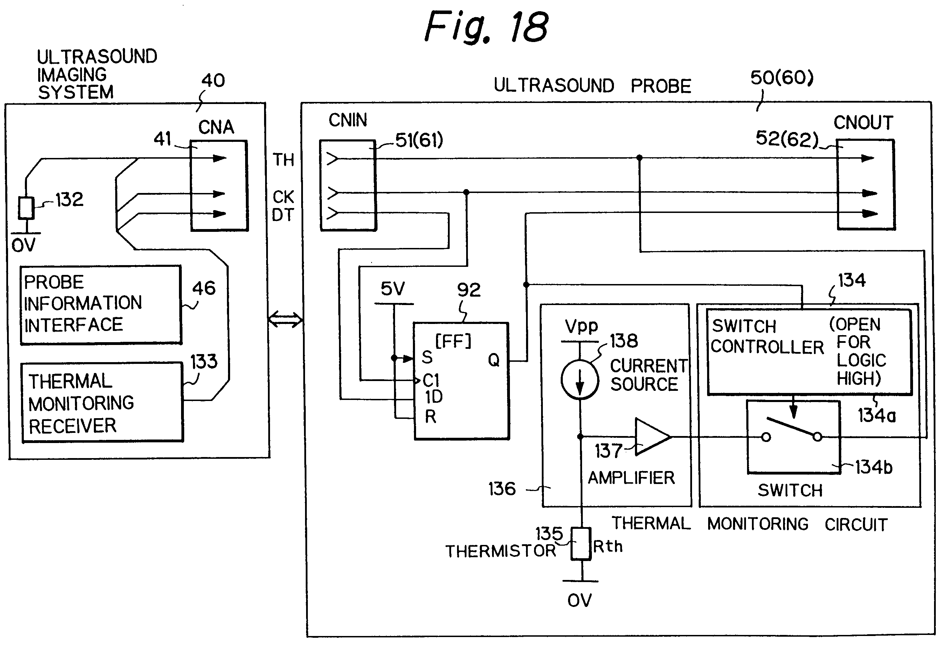

In a variant shown in Fig. 18, the thermal monitoring system uses a thermistor that has a negative resistance-thermal characteristic. This thermal monitoring system has a thermal monitoring circuit provided in the probe.

In this variant, the ultrasound imaging system 40 has a thermal data line (for transmission of thermal data TH) connected to ground by means of a resistor 132 and delivers a clock signal CK and a control bit signal DT from its probe information interface 46. Also it has a thermal monitoring receiver 133, instead of the previously-mentioned thermal monitor, which receives thermal data detected at the probe 50 (or 60).

The probe 50 (or 60) comprises a flip-flop 92, instead of the previously-mentioned input/output connector 53 (or 63), which when supplied with the clock signal CK and the control bit signal DT, delivers a low level output signal Q at the first clock signal CK and a high level output signal Q at the second clock signal CK, a switch controller 134a that opens a switch 134b when the output signal Q from the flip-flop 92 has the high level, the switch 134b opening and closing under the control of the switch controller 134a, a thermistor 135, instead of the previously-described thermosensor 56 (or 66), which has a negative resistance-temperature characteristic, an amplifier 137, included in a thermal monitoring circuit 136, which amplifies the output signal from the thermistor 135, and a DC source 138 that supplies a current to the amplifier 137 and thermistor 135.

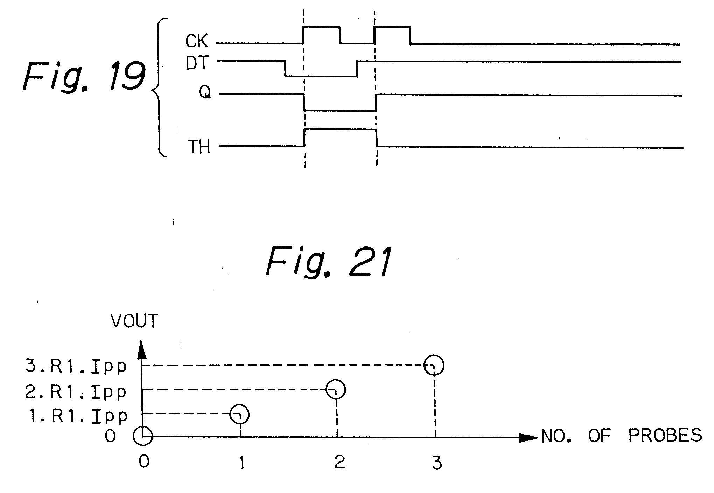

As shown in Fig. 19, when the control bit signal DT delivered from the probe information interface 46 has a low level when the clock signal CK changes to a high level, the flip-flop 92 delivers an output signal Q at the same level as the control bit signal DT, the switch 134b is closed under control of the switch controller 134a to which the low level signal has been supplied, thereby transmitting to the thermal monitoring receiver 133 at the ultrasound imaging system 40 the thermal data TH measured by the thermistor 135 and amplified by the amplifier 137.

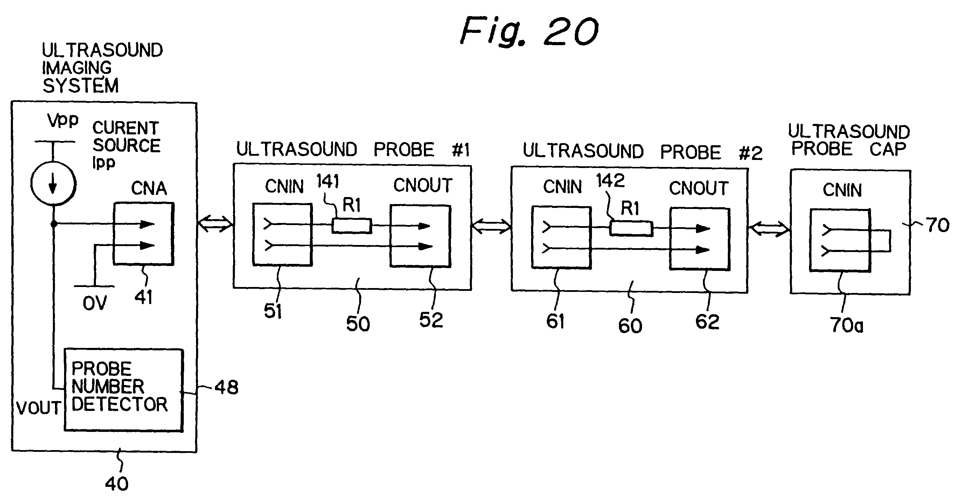

A variant of the number-of-probes detecting system will be described that has a current source (Ipp) provided at the ultrasound imaging system 40 as shown in Fig. 20.

The current source (Ipp) is connected to an end portion of one of a pair of transmission lines (signal lines) allocated to the number-of-probes detecting system, which end portion extends between the plug connector 41 of the ultrasound imaging system 40 and the number-of-probes detector 48, and the end portion of the other transmission line of the pair, which extends from the plug connector 41, is grounded. At the probe 50 (or 60), there is provided between the socket connector 51 (or 61) and plug connector 52 (or 62) a resistor (R1) 141 (or 142) in series with one of the pair of signal lines (of the bus means) allocated to the number-of-probes detecting system. The resistors 141 and 142 are of the same resistance.

When only one probe 50 (or 60) is in use, the loopback circuit of this number-of-probes detecting system is completed when the socket connector 51 (or 61) of the probe 50 (or 60) is connected to the plug connector 41 of the ultrasound imaging system 40, and the socket connector 70a of the cap 70 is connected to the plug connector 52 (or 62) of the probe. When two probes 50 and 60 are in use, the circuit is completed when the socket connector 61 of the second (outer) probe 60 is connected to the plug connector 52 (or 62) of the first probe (inner) 50 and the receptacle connector 70a of the cap 70 is connected to the plug connector 62 of the second probe 60 as shown in Fig. 20.

As shown in Fig. 21, the voltage rises in proportion to the constant current (Ipp) from the power source (Vpp) and is the product of the current (Ipp), the number of connected probes 50 (or 60) and the value (R1) of each resistor 141 and 142, which assures easy confirmation of the number of probes connected. In this arrangement, unless the cap 70 is attached the circuit of the number-of-probes detecting system is not completed, no current is carried and the resistance becomes infinitely high. Thus the presence or absence of the cap 70 is easily known.

The embodiments of the present invention described above can be varied and modified in various manners to enable a highly efficient ultrasound study even when the number of probes connected is variable, using a simplified construction and preliminary operation of the equipment.

As has been described in the foregoing, in an embodiment of the present invention (Fig. 1) one connecting device 13a (or 13b) of a first ultrasound probe 11a (or 11b) can be connected (fitted) to the single connecting device 10a of an ultrasound imaging system 10 and one connecting device 13b (or 13a) of a further ultrasound probe 11b (or 11a) is connected (fitted) to the other connecting device 14a (or 14b) of the first ultrasound probe 11a (or 11b). In this way a plurality of ultrasound probes 11a and 11b can be connected to the single connecting device 10a of the ultrasound imaging system 10. Namely, a necessary number of ultrasound probes can be connected to the ultrasound imaging system 10 before starting an ultrasound study. Thus, since it is unnecessary to replace any probe in the middle of the ultrasound study, the diagnosis can be done very easily and efficiently.

Also (Fig. 2), by opening and closing and input/output connector 21 provided at the ultrasound probe 11a (or 11b) the transducer 16a (or 16b) of an ultrasound probe 11a (or 11b) to be used is connected and disconnected respectively to the ultrasound imaging system 10. So one of the plurality of ultrasound probes 11a or 11b connected to the single connecting device 10a of the ultrasound imaging system 40 can be selected for use. No probe selecting device has to be provided at the ultrasound imaging system 10. Thus, the equipment construction can be considerably simplified, equipment operability during an ultrasound study can be greatly improved and the time for ultrasound diagnosis can be effectively shortened.

Furthermore, probe information (ultrasound data) produced by the transducer 16a (16b) in an ultrasound probe 11a or 11b which is currently connected can only be used for correct electroacoustic transducing of diagnostic ultrasound when the probe temperature is within a predetermined range. In a preferred embodiment, which measures the probe temperature of the operating probe, even when a plurality of ultrasound probes 11a and 11b are connected to the same connecting device 10a of the ultrasound imaging system 10, a desired probe cannot be mistaken for any other probe, thus ensuring a correct and rapid ultrasound diagnosis.

In one diagnostic sonography system embodying the present invention, each probe has a number-of-probes informing means 26 which cooperates with a number-of-probes detector 36 of the ultrasound imaging system 10 to confirm the number of ultrasound probes 11a or 11b connected to the same connecting device 10a of the ultrasound imaging system 10, thereby permitting the operator to easily know the number of connected probes even when a plurality of ultrasound probes are connected.

Also in one diagnostic sonography system embodying the present invention, a blind cap 12 can be attached to the connecting device 10a of the ultrasound imaging system 10 or the connecting device 14a or 14b of the ultrasound probe 11a or 11b. Thus, supply of an unnecessary signal or power from the connecting device 10a, 14a or 14b when open-circuited can be avoided, thereby eliminating a potential cause of damage to the equipment or mistaking of an ultrasound probe during ultrasound diagnosis.

## Claims

1. Diagnostic sonography apparatus comprising:
an ultrasound imaging unit (10;40); and
first and second ultrasound probes (11a, 11b; 50, 60), each having transducer means (16a, 16b; 55, 65) operable to emit ultrasound signals into a body to be examined and to produce ultrasound data representative of reflections in the body of such signals, which probes are both connected to the ultrasound imaging unit when the apparatus is in use so that a selected one of the probes can supply its said ultrasound data to the imaging unit for analysis and display by monitor means (10b; 42) of the ultrasound imaging unit;
characterised in that:
each probe has respective first and second connection devices (13a, 14a, 13b, 14b; 51, 52, 61, 62) such that the first and second probes (11a, 11b; 50, 60) can be connected together in a stacked configuration in which the first connection device (13b; 61) of the said second probe (11b; 60) is connected to the second connection device (14a; 52) of the said first probe (11a; 50), each probe also having bus means (15a, 15b), interconnecting its said first and second connection devices (13a, 14a, 13b, 14b; 51, 52, 61, 62), which bus means are also connected, when the probe concerned is selected for use, to the transducer means of the probe so that the ultrasound data produced by the transducer means is delivered to the bus means; and
the said ultrasound imaging unit (10; 40) includes probe selection means (38; 42a; 81) operable to generate probe select signals for use by the probes to determine which one of them is selected for use, and also has a connection device (10a; 41), in the form of a plug or socket connector, at which it delivers the said probe select signals and receives such ultrasound data, to which connection device (10a; 41) the said first connection device (13a; 51) of the first probe (11a; 50) can be connected, when the probes are connected together in the said stacked configuration, so that the respective bus means (15a, 15b) of the first and second probes are connected in series to the said connection device (10a; 41) of the imaging unit (10; 40) and can serve to convey from the imaging unit to both probes the said probe select signals and to convey back from the selected probe to the imaging unit the ultrasound data produced by that probe.

2. Apparatus as claimed in claim 1, wherein one (14a, 14b; 52, 62) of the said first and second connection devices of each probe is a plug connector and the other (13a, 13b; 51, 61) of those two connection devices is a socket connector.

3. Apparatus as claimed in claim 1 or 2, wherein each probe further includes input/output connecting means (21; 53, 63; 82-86; 86, 121-127) operable to make or break a connection between the bus means (15a, 15b) and the transducer means (16a, 16b; 55, 65) of the probe concerned in accordance with the said probe select signals received from the said probe selection means (38; 42a; 81).

4. Apparatus as claimed in any preceding claim, wherein each probe further-includes probe information setting means (24; 57, 67; 92-95; 128-131) having predetermined probe information concerning the probe, and the said monitor means (10b; 42) of the imaging unit has a probe information interface (33; 46) operable to read the probe information of the connected probes.

5. Apparatus as claimed in claim 4, wherein the said probe information setting means (24; 57, 67; 92-95; 128-131) delivers the said probe information to the imaging unit in coded form in response to a predetermined control signal supplied by the probe information interface (33; 46).

6. Apparatus as claimed in claim 5 read as appended to claim 3, wherein the said probe information includes data concerning the transducer means of the probe and is delivered to the imaging unit via the input/output connecting means (21; 53, 63).

7. Apparatus as claimed in any preceding claim, wherein each probe further includes thermosensing means (23; 56, 66; 134-138) operable to detect the temperature of the probe and to transmit to the imaging unit a thermosensing signal representative of the detected temperature, and the said monitor means (10b; 42) further include thermal monitoring means (34; 45; 100; 133) operable, upon receiving such a thermosensing signal from one of the probes, to derive therefrom a measure of the temperature of the probe concerned.

8. Apparatus as claimed in any preceding claim, wherein each probe includes a connected-status displaying means (25; 58, 68) for providing a predetermined visual, aural or tactile indication when the transducer means of the probe are connected to the bus means thereof.

9. Apparatus as claimed in claim 8, wherein the said connected-status displaying means (25; 58, 68) is activated to produce its said indication by a display drive signal generated by display driving means (35; 47) of the said monitor means (10b; 42).

10. Apparatus as claimed in any preceding claim, wherein the said imaging unit has displaying means (201) for displaying information concerning all of the probes connected to the unit.

11. Apparatus as claimed in claim 10, wherein the displayed information includes at least one of the following types of information:
the probe type; the probe application; and the number of probes.

12. Apparatus as claimed in claim 10 or 11, wherein the said imaging unit has selection controlling means selectively controllable, when the said displaying means (201) is displaying such information concerning the probes, to make the selection of the probe to be used from amongst the probes about which information is displayed.

13. Apparatus as claimed in any preceding claim, having at least three such ultrasound probes (11a, 11b, 11c ..., 11n), all of which can be connected together in such a stacked configuration, the first connection device of the third probe (11c) being connected to the second connection device (14b; 62) of the second probe (11b; 60), and so on for each further probe of the apparatus.

14. Apparatus as claimed in any preceding claim, further including a blind cap (12; 70) for connection to the second connection device of the last probe in the said stacked configuration to shield terminals of that second connection device from extraneous signals.

15. Apparatus as claimed in any preceding claim, wherein the said monitor means (10b; 42) of the imaging unit includes number-of-probes detecting means (36; 48, 112), and each probe includes probe check signal generating means (26; 54, 64; 115, 116; 141, 142), the number-of-probes detecting means (36) cooperating with the respective probe check signal generating means (26) of the probes, when the probes are connected in the said stacked configuration to the imaging unit, to detect the number of probes that are connected in that stacked configuration to the imaging unit or to detect a change in that number.

16. Apparatus as claimed in claim 15, wherein:
the said probe check signal generating means (115, 116) of each probe (50, 60) comprises a resistor (115, 116) connected between respective first and second signal lines of the bus means so that when the probes are connected in the said stacked configuration to the imaging unit the respective resistors of the probes are connected in parallel with one another between the said first and second signal lines; and
the said number-of-probes detecting means (48; 112) comprises a voltage source connected to the said connection device (41) of the imaging unit (40) for applying a predetermined constant potential (-Vmm) to the said first signal line, and amplifier means (112) also connected to the said connection device (41) of the imaging unit for providing a signal dependent upon the potential of the said second signal line.

17. Apparatus as claimed in claim 15 read as appended to claim 14, wherein:
in each probe (50, 60) the said probe check signal generating means (141, 142) comprise a resistor (141, 142) connected in series with one of a pair of signal lines of the bus means extending between the said first and second connection devices (51, 52, 61, 62);
the said blind cap (70) includes means for connecting together the two signal lines of the said pair in the last probe of the said stacked configuration so as to form a loopback connection passing through all of the probes, and
the said number-of-probes detecting means (48) comprise a current source connected to the said connection device (41) of the imaging unit (40) for causing a predetermined constant current (Ipp) to flow through the said loopback connection so that, based upon the potential difference between the two ends of that loopback connection, the number of probes connected in the said stacked configuration can be determined.

18. Apparatus as claimed in any preceding claim, wherein:
the said transducer means (16a, 16b; 55, 65) of each probe are electroacoustic transducer means which convert electrical drive signals into the said ultrasound signals to be emitted into the said body, and which convert the ultrasound reflections into electrical signals which constitute the said ultrasound data; and
the said monitor means (10b) include transmitter means (31; 43) for transmitting to the selected probe the said electrical drive signals for the transducer means of the probe, and receiver means (32; 44) for receiving and amplifying the said electrical signals produced by the transducer means of the selected probe.

19. An ultrasound probe, being one of the said ultrasound probes (11a, 11b; 50, 60) of diagnostic sonography apparatus as claimed in any preceding claim.

20. The ultrasound imaging unit of diagnostic sonography apparatus as claimed in any one of claims 1 to 18.

## Patentansprüche

1. Diagnostische Sonographievorrichtung mit:
einer Ultraschallbildeinheit (10; 40); und
ersten und zweiten Ultraschallsonden (11a, 11b; 50, 60), die jeweils ein Wandlermittel (16a, 16b; 55, 65) haben, das betriebsfähig ist, um Ultraschallsignale in einen zu untersuchenden Körper zu emittieren und um Ultraschalldaten zu erzeugen, die Reflexionen von solchen Signalen in dem Körper darstellen, welche Sonden beide mit der Ultraschallbildeinheit verbunden sind, wenn die Vorrichtung in Gebrauch ist, so daß eine ausgewählte der Sonden ihre Ultraschalldaten der Bildeinheit zur Analyse und Anzeige durch ein Monitormittel (10b; 42) der Ultraschallbildeinheit zuführen kann;
dadurch gekennzeichnet, daß:
jede Sonde jeweilige erste und zweite Verbindungsvorrichtungen (13a, 14a, 13b, 14b; 51, 52, 61, 62) hat, so daß die ersten und zweiten Sonden (11a, 11b; 50, 60) in einer gestapelten Konfiguration zusammen verbunden sein können, bei der die erste Verbindungsvorrichtung (13b; 61) der zweiten Sonde (11b; 60) mit der zweiten Verbindungsvorrichtung (14a; 52) der ersten Sonde (11a; 50) verbunden ist, wobei jede Sonde auch ein Busmittel (15a, 15b) hat, welches ihre ersten und zweiten Verbindungsvorrichtungen (13a, 14a, 13b, 14b; 51, 52, 61, 62) miteinander verbindet, welches Busmittel auch mit dem Wandlermittel der Sonde verbunden ist, wenn die betreffende Sonde zur Verwendung ausgewählt ist, so daß die Ultraschalldaten, die durch das Wandlermittel erzeugt werden, dem Busmittel zugeführt werden; und
die Ultraschallbildeinheit (10; 40) ein Sondenselektionsmittel (38; 42a; 81) enthält, das betriebsfähig ist, um Sondenselektionssignale zur Verwendung durch die Sonden zu erzeugen, um zu bestimmen, welche von ihnen für den Gebrauch selektiert ist, und auch eine Verbindungsvorrichtung (10a; 41) in der Form eines Steckverbinders des Stecker- oder Buchsentyps hat, an der sie die Sondenselektionssignale bereitstellt und solche Ultraschalldaten empfängt, mit welcher Verbindungsvorrichtung (10a; 41) die erste Verbindungsvorrichtung (13a; 51) der ersten Sonde (11a; 50) verbunden sein kann, wenn die Sonden in der gestapelten Konfiguration zusammen verbunden sind, so daß die jeweiligen Busmittel (15a, 15b) der ersten und zweiten Sonden mit der Verbindungsvorrichtung (10a; 41) der Bildeinheit (10; 40) seriell verbunden sind und dazu dienen können, die Sondenselektionssignale von der Bildeinheit zu beiden Sonden zu übertragen und von der selektierten Sonde die Ultraschalldaten, die durch jene Sonde erzeugt werden, zurück zu der Bildeinheit zu übertragen.

2. Vorrichtung nach Anspruch 1, bei der eine (14a, 14b; 52, 62) der ersten und zweiten Verbindungsvorrichtungen von jeder Sonde ein Steckverbinder des Steckertyps ist und die andere (13a, 13b; 51, 61) von jenen zwei Verbindungsvorrichtungen ein Steckverbinder des Buchsentyps ist.

3. Vorrichtung nach Anspruch 1 oder 2, bei der jede Sonde ferner ein Eingangs-/Ausgangsverbindungsmittel (21; 53, 63; 82-86; 86, 121-127) enthält, das betriebsfähig ist, um eine Verbindung zwischen dem Busmittel (15a, 15b) und dem Wandlermittel (16a, 16b; 55, 65) der betreffenden Sonde gemäß den Sondenselektionssignalen, die von dem Sondenselektionsmittel (38; 42a; 81) empfangen werden, herzustellen oder zu unterbrechen.

4. Vorrichtung nach irgendeinem vorhergehenden Anspruch, bei der jede Sonde ferner ein Sondeninformationseinstellmittel (24; 57, 67; 92-95; 128-131) enthält, das vorbestimmte Sondeninformationen bezüglich der Sonde hat, und das Monitormittel (10b; 42) der Bildeinheit eine Sondeninformationsschnittstelle (33; 46) hat, die betriebsfähig ist, um die Sondeninformationen der verbundenen Sonden zu lesen.

5. Vorrichtung nach Anspruch 4, bei der das Sondeninformationseinstellmittel (24; 57, 67; 92-95; 128-131) die Sondeninformationen für die Bildeinheit als Reaktion auf ein vorbestimmtes Steuersignal, das durch die Sondeninformationsschnittstelle (33; 46) zugeführt wird, in codierter Form bereitstellt.

6. Vorrichtung nach Anspruch 5 in Verbindung mit Anspruch 3, bei der die Sondeninformationen Daten bezüglich des Wandlermittels der Sonde enthalten und der Bildeinheit über das Eingangs-/Ausgangsverbindungsmittel (21; 53, 63) zugeführt werden.

7. Vorrichtung nach irgendeinem vorhergehenden Anspruch, bei der jede Sonde ferner ein Thermosensormittel (23; 56, 66; 134-138) enthält, das betriebsfähig ist, um die Temperatur der Sonde zu detektieren und um ein Thermosensorsignal zu der Bildeinheit zu senden, das die detektierte Temperatur verkörpert, und das Monitormittel (10b; 42) ferner ein Temperaturüberwachungsmittel (34; 45; 100; 133) enthält, das bei Empfang solch eines Thermosensorsignals von einer der Sonden betriebsfähig ist, um aus ihm eine Messung der Temperatur der betreffenden Sonde abzuleiten.

8. Vorrichtung nach irgendeinem vorhergehenden Anspruch, bei der jede Sonde ein Verbindungsstatusanzeigemittel (25; 58, 68) enthält, zum Vorsehen einer vorbestimmten visuellen, auralen oder taktilen Meldung, wenn das Wandlermittel der Sonde mit ihrem Busmittel verbunden ist.

9. Vorrichtung nach Anspruch 8, bei der das Verbindungsstatusanzeigemittel (25; 58, 68) durch ein Anzeigetreibersignal, das durch das Anzeigetreibermittel (35; 47) des Monitormittels (10b; 42) erzeugt wird, aktiviert wird, um seine Meldung zu erzeugen.

10. Vorrichtung nach irgendeinem vorhergehenden Anspruch, bei der die Bildeinheit ein Anzeigemittel (201) zum Anzeigen von Informationen bezüglich aller Sonden hat, die mit der Einheit verbunden sind.

11. Vorrichtung nach Anspruch 10, bei der die angezeigten Informationen wenigstens einen der folgenden Typen von Informationen enthalten:
den Sondentyp; die Sondenanwendung; und die Sondenanzahl.

12. Vorrichtung nach Anspruch 10 oder 11, bei der die Bildeinheit ein Selektionssteuermittel hat, das selektiv steuerbar ist, wenn das Anzeigemittel (201) solche Informationen bezüglich der Sonden anzeigt, um die Auswahl der Sonde vorzunehmen, die von den Sonden zu verwenden ist, über die Informationen angezeigt werden.

13. Vorrichtung nach irgendeinem vorhergehenden Anspruch, die wenigstens drei solche Ultraschallsonden (11a, 11b, 11c ..., 11n) hat, die alle in solch einer gestapelten Konfiguration zusammen verbunden sein können, wobei die erste Verbindungsvorrichtung der dritten Sonde (11c) mit der zweiten Verbindungsvorrichtung (14b; 62) der zweiten Sonde (11b; 60) verbunden ist, und so weiter mit jeder weiteren Sonde der Vorrichtung.

14. Vorrichtung nach irgendeinem vorhergehenden Anspruch, die ferner eine Blindkappe (12; 70) zur Verbindung mit der zweiten Verbindungsvorrichtung der letzten Sonde in der gestapelten Konfiguration enthält, um Anschlüsse von jener zweiten Verbindungsvorrichtung vor äußeren Signalen abzuschirmen.

15. Vorrichtung nach irgendeinem vorhergehenden Anspruch, bei der das Monitormittel (10b; 42) der Bildeinheit ein Sondenanzahldetektionsmittel (36; 48, 112) enthält, und jede Sonde ein Sondenprüfsignalerzeugungsmittel (26; 54, 64; 115, 116; 141, 142) enthält, welches Sondenanzahldetektionsmittel (36) mit dem jeweiligen Sondenprüfsignalerzeugungsmittel (26) der Sonden kooperiert, wenn die Sonden in der gestapelten Konfiguration mit der Bildeinheit verbunden sind, um die Anzahl von Sonden zu detektieren, die in jener gestapelten Konfiguration mit der Bildeinheit verbunden sind, oder um eine Veränderung jener Anzahl zu detektieren.

16. Vorrichtung nach Anspruch 15, bei der:
das Sondenprüfsignalerzeugungsmittel (115, 116) von jeder Sonde (50, 60) einen Widerstand (115, 116) umfaßt, der zwischen jeweiligen ersten und zweiten Signalleitungen des Busmittels so verbunden ist, daß dann, wenn die Sonden in der gestapelten Konfiguration mit der Bildeinheit verbunden sind, die jeweiligen Widerstände der Sonden zwischen den ersten und zweiten Signalleitungen parallel miteinander verbunden sind; und
das Sondenanzahldetektionsmittel (48; 112) eine Spannungsquelle umfaßt, die mit der Verbindungsvorrichtung (41) der Bildeinheit (40) verbunden ist, zum Anwenden eines vorbestimmten konstanten Potentials (-Vmm) auf die erste Signalleitung, und ein Verstärkermittel (112), das auch mit der Verbindungsvorrichtung (41) der Bildeinheit verbunden ist, zum Vorsehen eines Signals, das von dem Potential der zweiten Signalleitung abhängt.

17. Vorrichtung nach Anspruch 15 in Verbindung mit Anspruch 14, bei der:
in jeder Sonde (50, 60) das Sondenprüfsignalerzeugungsmittel (141, 142) einen Widerstand (141, 142) umfaßt, der mit einer von einem Paar von Signalleitungen des Busmittels, das sich zwischen den ersten und zweiten Verbindungsvorrichtungen (51, 52, 61, 62) erstreckt, seriell verbunden ist;
die Blindkappe (70) ein Mittel enthält zum Miteinanderverbinden der zwei Signalleitungen des Paares in der letzten Sonde der gestapelten Konfiguration, um eine Rückschleifenverbindung zu bilden, die alle Sonden durchläuft; und
das Sondenanzahldetektionsmittel (48) eine Stromquelle umfaßt, die mit der Verbindungsvorrichtung (41) der Bildeinheit (40) verbunden ist, zum Verursachen, daß ein vorbestimmter konstanter Strom (Ipp) durch die Rückschleifenverbindung fließt, so daß auf der Basis der Potentialdifferenz zwischen den zwei Enden jener Rückschleifenverbindung die Anzahl von Sonden, die in der gestapelten Konfiguration verbunden sind, bestimmt werden kann.

18. Vorrichtung nach irgendeinem vorhergehenden Anspruch, bei der:
das Wandlermittel (16a, 16b; 55, 65) von jeder Sonde ein elektroakustisches Wandlermittel ist, das elektrische Treibersignale in die Ultraschallsignale konvertiert, die in den Körper zu emittieren sind, und das die Ultraschallreflexionen in elektrische Signale konvertiert, die die Ultraschalldaten darstellen; und
das Monitormittel (10b) ein Sendermittel (31; 43) enthält, zum Senden der elektrischen Treibersignale für das Wandlermittel der Sonde zu der ausgewählten Sonde, und ein Empfängermittel (32; 44) zum Empfangen und Verstärken der elektrischen Signale, die durch das Wandlermittel der ausgewählten Sonde erzeugt werden.

19. Ultraschallsonde, die eine der Ultraschallsonden (11a, 11b; 50, 60) der diagnostischen Sonographievorrichtung nach irgendeinem vorhergehenden Anspruch ist.

20. Ultraschallbildeinheit der diagnostischen Sonographievorrichtung nach irgendeinem der Ansprüche 1 bis 18.

## Revendications

1. Dispositif de diagnostic par sonométrie comprenant :
- une unité d'imagerie par ultrasons (10; 40); et
- des première et seconde sondes à ultrasons (11a, 11b; 50, 60) possédant chacune un moyen de transducteur (16a, 16b; 55, 65) pouvant fonctionner pour émettre des signaux par ultrasons dans un corps à examiner et pour produire des données d'ultrasons représentant des réflexions dans le corps de tels signaux, sondes qui sont raccordées chacune à l'unité d'imagerie par ultrasons lorsque le dispositif est utilisé de telle façon qu'une sonde sélectionnée puisse fournir ses dites données d'ultrasons à l'unité d'imagerie pour une analyse et un affichage par un moyen de contrôle (10b; 42) de l'unité d'imagerie par ultrasons;
dispositif caractérisé en ce que :
- chaque sonde possède des premier et second dispositifs de connexion respectifs (13a, 14a, 13b, 14b; 51, 52, 61, 62) de telle façon que les première et seconde sondes (11a, 11b; 50, 60) puissent être raccordées en conjonction selon une configuration par empilage selon laquelle le premier dispositif de connexion (13b; 61) de ladite seconde sonde (11b; 60) est raccordé au second dispositif de connexion (14a; 52) de ladite première sonde (11a; 50), chaque sonde possédant, de même, un moyen de bus (15, 15b) raccordant ses dits premier et second dispositifs de connexion (13a, 14a, 13b, 14b; 51, 52, 61, 62), moyen de bus raccordé de même, lorsque la sonde concernée est choisie pour une utilisation, au moyen de transducteur de la sonde de façon à délivrer les données d'ultrasons produites par le moyen de transducteur au moyen de bus; et
- ladite unité d'imagerie par ultrasons (10; 40) comprend un moyen de sélection de sonde (38; 42a; 81) servant à générer des signaux de sélection de sonde devant être utilisés par les sondes pour déterminer laquelle d'entre elles est sélectionnée pour une utilisation, et possède, de même, un dispositif de connexion (10a; 41) sous la forme d'un connecteur à fiche ou prise femelle, auquel il délivre lesdits signaux de sélection de sonde et reçoit de telles données d'ultrasons, dispositif de connexion (10a; 41) auquel peut être raccordé ledit premier dispositif de connexion (13a; 51) de la première sonde (11a; 50) lorsque les sondes sont raccordées selon ladite configuration par empilage de telle façon que les moyens respectifs de bus (15a, 15b) des première et seconde sondes soient montés en série avec ledit dispositif de connexion (10a; 41) de l'unité d'imagerie (10; 40) et puissent servir à transporter, de l'unité d'imagerie vers chacune des sondes, lesdits signaux de sélection de sonde et à ramener, de la sonde sélectionner vers l'unité d'imagerie, les données d'ultrasons produites par cette sonde.

2. Dispositif selon la revendication 1, dans lequel un dispositif (14a, 14b; 52, 62) desdits premier et second dispositifs de connexion de chaque sonde est un connecteur à fiche et l'autre (13a, 13b; 51, 61) de ces deux dispositifs de connexion est un connecteur à prise femelle.

3. Dispositif selon la revendication 1 ou 2, dans lequel chaque sonde comprend, de plus, un moyen de connexion d'entrée/sortie (21; 53, 63; 82 à 86; 86, 121 à 127) servant à appliquer ou à supprimer une connexion entre les moyens de bus (15a, 15b) et les moyens de transducteur (16a, 16b; 55, 65) de la sonde concernée selon lesdits signaux de sélection de sonde reçus dudit moyen de sélection de sonde (38; 42a; 81).

4. Dispositif selon l'une quelconque des revendications précédentes, dans lequel chaque sonde comprend, de plus, un moyen d'établissement d'information de sonde (24; 57, 67; 92 à 95; 128 à 131) possédant une information de sonde prédéterminée concernant la sonde, et ledit moyen de contrôleur (10b; 42) de l'unité d'imagerie possède une interface d'information de sonde (33; 46) servant à lire l'information de sonde des sondes raccordées.

5. Dispositif selon la revendication 4, dans lequel ledit moyen d'établissement d'information de sonde (24; 57, 67; 92 à 95; 128 à 131) délivre ladite information de sonde à l'unité d'imagerie sous une forme codée en réponse à un signal de commande prédéterminé fourni par l'interface d'information de sonde (33; 46).

6. Dispositif selon la revendication 5 dépendante de la revendication 3, dans lequel ladite information de sonde comprend des données concernant le moyen de transducteur de la sonde et est fournie à l'unité d'imagerie via le moyen de connexion d'entrée/sortie (21; 53, 63).

7. Dispositif selon l'une quelconque des revendications précédentes, dans lequel chaque sonde comprend, de plus, un moyen de détection thermique (23; 56, 66; 134 à 138) prévu pour détecter la température de la sonde et pour transmettre à l'unité d'imagerie un signal de détection thermique représentant la température détectée, et ledit moyen de contrôle (10b; 42) comprend, de plus, un moyen de contrôle thermique (34; 45; 100; 133) servant, lors de la réception d'un tel signal de détection thermique d'une des sondes, à en déduire une mesure de la température de la sonde concernée.

8. Dispositif selon l'une quelconque des revendications précédentes, dans lequel chaque sonde comprend un moyen d'affichage de l'état de connexion (25; 58, 68) pour fournir une indication prédéterminée visuelle, vocale ou tactile lorsque le moyen de transducteur de la sonde est raccordé à son moyen de bus.

9. Dispositif selon la revendication 8, dans lequel ledit moyen d'affichage d'état de connexion (25; 58, 68) est activé pour produire ladite indication par un signal d'attaque d'affichage généré par un moyen d'attaque d'affichage (35; 47) dudit moyen de contrôle (10b; 42).

10. Dispositif selon l'une quelconque des revendications précédentes, dans lequel ladite unité d'imagerie possède un moyen d'affichage (201) pour afficher l'information concernant toutes les sondes raccordées à l'unité.

11. Dispositif selon la revendication 10, dans lequel l'information affichée comprend au moins un des types suivants d'information : le type de sonde, l'application de la sonde et le nombre de sondes.

12. Dispositif selon la revendication 10 ou 11, dans lequel ladite unité d'imagerie possède un moyen de commande de sélection pouvant être commandé de façon sélective lorsque ledit moyen d'affichage (201) affiche une telle information concernant les sondes, pour effectuer la sélection de la sonde à utiliser parmi les sondes dont l'information est affichée.

13. Dispositif selon l'une quelconque des revendications précédentes, possédant au moins trois telles sondes à ultrasons (11a, 11b, 11c, ..., 11n), toutes pouvant être raccordées en conjonction selon une telle configuration par empilage, le premier dispositif de connexion de la troisième sonde (11c) étant raccordé au second dispositif de connexion (14b; 62) de la seconde sonde (11b; 60) et ainsi de suite, pour chaque sonde supplémentaire du dispositif.

14. Dispositif selon l'une quelconque des revendications précédentes, comprenant, de plus, un capuchon aveugle (12; 70) pour une connexion au second dispositif de connexion de la dernière sonde dans ladite configuration par empilage pour isoler les bornes de ce second dispositif de connexion des signaux externes.

15. Dispositif selon l'une quelconque des revendications précédentes, dans lequel ledit moyen de contrôle (10b; 42) de l'unité d'imagerie comprend un moyen de détection du nombre de sondes (36; 48, 112) et chaque sonde comprend un moyen de génération de signal de vérification de sonde (26; 54, 64; 115, 116; 141, 142), le moyen de détection du nombre de sondes (36) coopérant avec le moyen respectif de génération de signal de vérification de sonde (26) des sondes lorsque les sondes sont raccordées dans ladite configuration par empilage à l'unité d'imagerie, afin de détecter le nombre de sondes raccordées dans cette configuration par empilage à l'unité d'imagerie ou pour détecter une variation de ce nombre.

16. Dispositif selon la revendication 15, dans lequel :
- ledit moyen de génération de signal de vérification de sonde (115, 116) de chaque sonde (50, 60) comprend une résistance (115, 116) montée entre des première et seconde lignes respectives de signal du moyen de bus de telle façon que, lorsque les sondes sont raccordées dans ladite configuration par empilage à l'unité d'imagerie, les résistances respectives des sondes soient montées en parallèle entre lesdites première et seconde lignes de signal; et
- ledit moyen de détection du nombre de sondes (48; 112) comprend une source de tension raccordée audit dispositif de connexion (41) de l'unité d'imagerie (40) pour l'application d'un potentiel constant prédéterminé (-Vmm) à ladite première ligne de signal, et un moyen d'amplificateur (112) raccordé, de même, audit dispositif de connexion (41) de l'unité d'imagerie pour fournir un signal dépendant du potentiel de ladite seconde ligne de signal.

17. Dispositif selon la revendication 15 dépendante de la revendication 14, dans lequel;
- dans chaque sonde (50, 60), ledit moyen de génération de signal de vérification de sonde (141, 142) comprend une résistance (141, 142) montée en série avec une d'une paire de lignes de signal du moyen de bus s'étendant entre lesdits premier et second dispositifs de connexion (51, 52, 61, 62);
- ledit capuchon aveugle (70) comprend un moyen pour le raccordement des deux lignes de signal de ladite paire dans la dernière sonde de ladite configuration par empilage de façon à former une connexion à bouclage rétroactif traversant toutes les sondes; et
- ledit moyen de détection du nombre de sondes (48) comprend une source de courant raccordée audit dispositif de connexion (41) de l'unité d'imagerie (40) pour faire passer un courant constant prédéterminé (Ipp) dans ladite connexion de bouclage rétroactif de telle façon que, sur la base de la différence de potentiel entre les deux extrémités de cette connexion de bouclage rétroactif, le nombre de sondes raccordées dans ladite configuration par empilage puisse être déterminé.

18. Dispositif selon l'une quelconque des revendications précédentes, dans lequel :
- lesdits moyens de transducteur (16a, 16b; 55, 65) de chaque sonde est un moyen de transducteur électroacoustique convertissant des signaux électriques d'attaque en lesdits signaux à ultrasons à émettre dans ledit corps, et convertissant les réflexions d'ultrasons en signaux électriques constituant lesdites données d'ultrasons; et
- ledit moyen de contrôle (10b) comprend un moyen d'émetteur (31; 43) pour transmettre à la sonde sélectionnée lesdits signaux électriques d'attaque pour le moyen de transducteur de la sonde, et un moyen de récepteur (32; 44) pour recevoir et amplifier lesdits signaux électriques produits par le moyen de transducteur de la sonde sélectionnée.

19. Sonde par ultrasons, constituée par une desdites sondes par ultrasons (11a, 11b; 50, 60) du dispositif de diagnostic par sonométrie selon l'une quelconque des revendications précédentes.

20. Unité d'imagerie par ultrasons d'un dispositif de diagnostic par sonométrie selon l'une quelconque des revendications 1 à 18.
